# EUROPEAN PATENT SPECIFICATION

(11) **EP 1 786 854 B1**
(45) Date of publication and mention of the grant of the patent: **25.05.2011**
(21) Application number: 05796408.2
(22) Date of filing: 01.09.2005
(51) Int. Cl.: C08J 9/00, C08J 9/14

(54) **EXPANDED AND EXTRUDED THERMOPLASTIC FOAMS MADE WITH METHYL FORMATE-BASED BLOWING AGENTS**
EXPANDIERTE UND EXTRUDIERTE THERMOPLASTISCHE SCHÄUME HERGESTELLT MITTELS BLÄHMITTELN AUF BASIS VON METHYLFORMIAT
MOUSSES THERMOPLASTIQUES EXPANSEES ET EXTRUDEES OBTENUES AVEC DES AGENTS DE SOUFFLAGE UTILISANT UN FORMATE DE METHYLE

(30) Priority: 03.09.2004 US 934832; 17.12.2004 US 16312; 03.05.2005 US 122158; 13.06.2005 US 151814
(43) Date of publication of application: 23.05.2007
(60) Divisional application: 10183423.2
(73) Proprietor: Pactiv Corporation, Lake Forest, IL 60045 (US)
(72) Inventor: HANDA, Yash, Paul, Pittsford, New York 14534 (US)
(74) Representative: Lawrence, John
(86) International application number: PCT/US2005/031083
(87) International publication number: WO 2006/028891

(56) References cited:
- US-A- 3 900 433
- US-A- 3 914 191
- US-A- 4 033 910
- US-A- 4 098 941
- US-A1- 2003 114 549

## Description

### FIELD OF INVENTION

The present invention relates generally to foams using environmentally benign blowing agents, and processes of making the same. Particularly, the present invention relates to thermoplastic polymer foams using methyl formate-based blowing agents, that produce stable foams, and processes of making the same. The thermoplastic polymer foams are particularly suitable for various packaging applications in the form of foam expanded beads or extruded sheets and the articles made therefrom, and for insulation applications such as insulation boards in building materials.

### BACKGROUND OF THE INVENTION

Thermoplastic foams made from alkenyl aromatic polymers (*e.g*, polystyrene) or polyolefin polymers (*e.g*. polyethylene and polypropylene) have found extensive use, particularly as packaging and insulating materials. Alkenyl aromatic polymer foams in the form of beads or sheets having a thickness of less than about one-half inch are used to make packaging materials such as containers (cups, bowls, clamshells, picnic chests) for hot or cold beverages or food, and for protection during transportation of delicate or shock sensitive articles whereby the beads are fused or the sheet is thermoformed in a mold to give the packaging material of desired shape. The foam beads are also used as loose fill dunnage material. Generally, insulating foams are produced in thickness greater than about one-half inch. The insulating value of such foams is measured in terms of heat conduction resistance or R-value, per one inch (or one centimeter) of foam thickness. Adequate insulating foams typically have R-values of about 4.0 per inch (1.57 per cm) or greater. Packaging and insulation foam products with thickness greater than about 0.5 inch (1.27 cm) are called planks or boards. It is desirable that foams be dimensionally stable; this characteristic is even more desirable for planks or boards.

These and other polymer foams are commonly made using a continuous process where a blowing agent laden molten resin is extruded under pressure through an appropriate die into a lower pressure atmosphere. Alternatively, a batch or staged process can be used, where small polymer beads (also called particles or pellets) are impregnated with blowing agent and then heated rapidly to a temperature near or above the glass transition temperature of the polymer-blowing agent system, or subjected to an external compressive stress at a temperature up to the glass transition temperature of the polymer-blowing agent system.

Presently, physical blowing agents more commonly used for making thermoplastic polymer foams such as alkenyl aromatic polymer (*e.g*, polystyrene) or polyolefin polymer (*e.g*. polyethylene or polypropylene) foams are hydrocarbons, chlorinated hydrocarbons, hydrochlorofluorocarbons, hydrofluorocarbons, or combinations thereof. Hydrocarbons with three or more carbon atoms are considered volatile organic compounds (VOCs) that can lead to formation of smog. Furthermore, some halogenated hydrocarbons are either VOCs or have high ozone depletion potential (ODP) or are hazardous air pollutants (HAPs) and, at times, may fall into more than one of these categories. Therefore, the use of hydrocarbon and halogenated hydrocarbon blowing agents for preparing polymeric foams is not preferred environmentally and imposes many limitations on the manufacturing process, thus complicating and significantly increasing the cost of manufacturing. For example, alkenyl aromatic polymer (*e.g*., polystyrene) packaging foams (beads or sheets) are generally made using VOCs such as butanes or pentanes, and insulating foams are currently made using VOCs such as hydrocarbons and halogenated hydrocarbons or non-VOCs such as 1-chloro-1,1-difluoroethane (HCFC-142b), alone or in combination with ethyl chloride, which is classified both as a VOC and a HAP. It is therefore desirable to minimize or eliminate altogether the use of VOC and/or HAP compounds as blowing agents for preparing polymeric foams.

Methyl formate is classified as a non-VOC (Federal Register, Volume 69, Number 228, November 29, 2004), is non-HAP, and has zero ODP. U.S. patent Number 6,753,357 describes the use of methyl formate to produce stable, rigid isocyanate/polyol based polyurethane foams. It is noted, however, that such polyurethane foams are thermoset, so as to be made via a cross-linking and curing process. The dimensional stability or instability imparted to the final polyurethane foam product by the nature of the blowing agent therefore is quite different than in the case of thermoplastic polymer foams.

Therefore, a need exists for blowing agents employing methyl formate and environmentally friendly co-blowing agents, preferably non-VOC and/or non-HAP co-blowing agents, as components of the blowing agent blend to produce stable thermoplastic foams, without compromising the product quality in terms of appearance, mechanical or compressive strength, and insulation value, and that enable a cost-effective and versatile manufacturing process.

US3914191 discloses a methyl formate-trichloromonofluoromethane azeotrope as a blowing agent in producing polystyrene foam.

### SUMMARY OF THE INVENTION

It is an object of the present invention to provide for a polymer foam structure. This object can be achieved by the features as defined in the independent claims. Further enhancements are characterized in the dependent claims.

According to one embodiment of the present invention, a preferred blowing agent for making thermoplastic polymer foams is a blend comprising methyl formate and at least one co-blowing agent. The co-blowing agent is either a physical co-blowing agent (*e.g*. an inorganic agent, a hydrocarbon, a halogenated hydrocarbon, an ether, an ester, an acetal, an alkanol, a carbonate, an amine, a ketone, or any combination thereof), a chemical co-blowing agent, or combinations thereof. In a preferred embodiment, the thermoplastic polymer foam structure is an alkenyl aromatic polymer foam structure. In a more preferred embodiment, the alkenyl aromatic polymer foam is an expanded polystyrene foam structure (also called EPS) or an extruded polystyrene foam structure (also called XPS), either of which can be used as packaging and insulation foams. The blowing agent of the preferred embodiment is a blend including any combination of methyl formate and one or more co-blowing agents. For packaging foams, the preferred co-blowing agent is a hydrocarbon, more preferably a hydrocarbon containing four or five carbon atoms, a halogenated hydrocarbon, an ether, an alkanol, a ketone, or any combination thereof. For insulating foams, especially as planks or boards, the preferred co- blowing agent is a hydrocarbon, more preferably a hydrocarbon containing four or five carbon atoms, 1,1,1,2-tetrafluoroethane (HFC-134a), 1-chloro-1,1-difluoroethane (HCFC-142b), or any combination thereof. Generally, the foam sheets or beads have a thickness of less than about 0.5 inch (1.27 cm); and the insulating foam boards have a thickness of at least about 0.5 inch (1.27 cm), preferably about 0.5 inch to about 3 inch (1.27 cm to 7.62 cm), and have R- values of about 4.0 per inch (1.57 cm) or greater. According to another embodiment, an expandable polymeric formulation is used to prepare an expanded thermoplastic polymer foam structure. The formulation includes a thermoplastic polymer and a blowing agent blend comprising methyl formate and at least one co-blowing agent. The co-blowing agent is either a physical co-blowing agent (*e.g*. an inorganic agent, a hydrocarbon, a halogenated hydrocarbon, an ether, an ester, an acetal, an alkanol, a carbonate, an amine, a ketone, water, or any combination thereof), a chemical co-blowing agent, or combinations thereof. In a preferred embodiment, the thermoplastic polymer foam structure is an alkenyl aromatic polymer foam structure. In a more preferred embodiment, the alkenyl aromatic polymer foam is an expanded polystyrene foam structure (EPS). The blowing agent of the preferred embodiment is a blend including any combination of methyl formate and one or more co-blowing agents. For packaging foams, the preferred co-blowing agent is a hydrocarbon, more preferably a hydrocarbon containing four or five carbon atoms, a halogenated hydrocarbon, an ether, an alkanol, a ketone, or any combination thereof, and for insulating foams, especially as planks or boards, the preferred co-blowing agent is a hydrocarbon, more preferably a hydrocarbon containing four or five carbon atoms, 1,1,1,2-tetrafluoroethane (HFC-134a), 1-chloro-1,1- difluoroethane (HCFC-142b), or any combination thereof. In a preferred embodiment, the formulation is in the form of expandable beads.

According to another embodiment, a thermoplastic polymer foam structure is prepared by melting a thermoplastic polymer, mixing (*e.g*., dissolving, impregnating or entrapping) an effective amount of blowing agent, and extruding the compressed mixture through an appropriate die into a low pressure zone to form a foam sheet or a board, or into a low temperature zone to form expandable beads. In another aspect of this embodiment, the expandable beads are prepared by dissolving an effective amount of blowing agent into the thermoplastic polymer. In a further aspect, the expandable beads are prepared by synthesizing the polymer in the presence of the blowing agent so as to dissolve, impregnate or entrap the blowing agent in the polymer. The polymer can be in the form pellets, preferably of size about 0.1 inch x 0.1 inch (0.254 cm x 0.254 cm), beads or particles. The expanded foam structure is then obtained by rapidly heating the expandable beads to a temperature near or above the glass transition temperature of the polymer-blowing agent formulation, to form foamed beads, which can be used as such or further compression molded into desired shapes and thickness. In another aspect, the expanded foam structure is obtained by subjecting the beads to an external compressive stress at a temperature up to the glass transition temperature of the polymer- blowing agent formulation. A preferred blowing agent for making the thermoplastic polymer foam structure is a blend comprising methyl formate and at least one co-blowing agent. The co-blowing agent is either a physical co-blowing agent (*e.g*. an inorganic agent, a hydrocarbon, a halogenated hydrocarbon, an ether, an ester, an acetal, an alkanol, a carbonate, an amine, a ketone, water, or any combination thereof), a chemical co- blowing agent, or combinations thereof. In a preferred embodiment, the thermoplastic polymer foam structure is an alkenyl aromatic polymer foam structure. In a more preferred embodiment, the alkenyl aromatic polymer foam is an expanded polystyrene foam structure (EPS) or an extruded polystyrene foam structure (XPS), either of which is used as packaging and insulation foams. The blowing agent of the preferred embodiment is a blend including any combination of methyl formate and one or more co-blowing agents. For packaging foams, the preferred co-blowing agent is a hydrocarbon, more preferably a hydrocarbon containing four or five carbon atoms, a halogenated hydrocarbon, an ether, an alkanol, a ketone, or any combination thereof. For insulating foams, especially as planks or boards, the preferred co-blowing agent is a hydrocarbon, more preferably a hydrocarbon containing four or five carbon atoms, 1,1,1,2-tetrafluoroethane (HFC-134a), 1-chloro-1,1-difluoroethane (HCFC-142b), or any combination thereof. Generally, the foam sheets or beads have a thickness of less than about 0.5 inch (1.27cm); the insulating foam boards have a thickness of at least about 0.5 inch (1.27 cm), preferably about 0.5 inch to about 3 inch (1.27 cm to 7.62 cm), and have R-values of about 4.0 per inch (1.57 per cm) or greater. According to a process of the present invention, a thermoplastic polymer foam structure is prepared by melting a thermoplastic polymer, mixing (*e.g*., dissolving, impregnating or entrapping) an effective amount of blowing agent, and extruding the compressed mixture through an appropriate die into a low pressure zone to form a foam sheet or a board, or into a low temperature zone to form expandable beads. In another aspect of this embodiment, the expandable beads are prepared by dissolving an effective amount of blowing agent into the thermoplastic polymer. In a further aspect, the expandable beads are prepared by synthesizing the polymer in the presence of the blowing agent so as to dissolve, impregnate or entrap the blowing agent in the polymer. The polymer can be in the form pellets, preferably of size about 0.1 inch x 0.1 inch (0.254 cm x 0.254), beads or particles. The expanded foam structure is then obtained by rapidly heating the expandable beads to a temperature near or above the glass transition temperature of the polymer-blowing agent formulation, to form foamed beads, which can be used as such or further compression molded into desired shapes and thickness. In another aspect, the expanded foam structure is obtained by subjecting the beads to an external compressive stress at a temperature up to the glass transition temperature of the polymer- blowing agent formulation. A blowing agent for making the thermoplastic polymer foam structure is a blend comprising methyl formate and at least one co- blowing agent. The co-blowing agent is either a physical co-blowing agent (*e.g*. an inorganic agent, a hydrocarbon, a halogenated hydrocarbon, an ether, an ester, an acetal, an alkanol, a carbonate, an amine, a ketone, water, or any combination thereof), a chemical co-blowing agent, or combinations thereof. In a preferred embodiment, the thermoplastic polymer foam structure is an alkenyl aromatic polymer foam structure. In a more preferred embodiment, the alkenyl aromatic polymer foam is an expanded polystyrene foam structure (EPS) or an extruded polystyrene foam structure (XPS), either of which is used as packaging and insulation foams. The blowing agent of the preferred embodiment is a blend including any combination of methyl formate and one or more co-blowing agents. For packaging foams, the preferred co-blowing agent is a hydrocarbon, more preferably a hydrocarbon containing four or five carbon atoms, a halogenated hydrocarbon, an ether, an alkanol, a ketone, or any combination thereof. For insulating foams, especially as planks or boards, the preferred co-blowing agent is a hydrocarbon, more preferably a hydrocarbon containing four or five carbon atoms, 1,1,1,2-tetrafluoroethane (HFC-134a), 1-chloro-1,1-difluoroethane (HCFC-142b), or any combination thereof. Generally, the foam sheets or beads have a thickness of less than about 0.5 inch (1.27 cm); the insulating foam boards have a thickness of at least about 0.5 inch (1.27 cm), preferably about 0.5 inch to about 3 inch (1.27 cm to 7.62 cm), and have R-values of about 4.0 per inch (1.57 per cm) or greater. The polymer foam structure obtained by the process of the present invention preferably is a substantially closed-cell and dimensionally-stable structure. In a preferred embodiment, the alkenyl aromatic foam structure includes a polystyrene polymer.

The inventive formulations and methods of the present invention employ blowing agents containing environmentally friendly non-VOC and non-HAP species, and thus offer significant advantages as compared with presently used blowing agents.

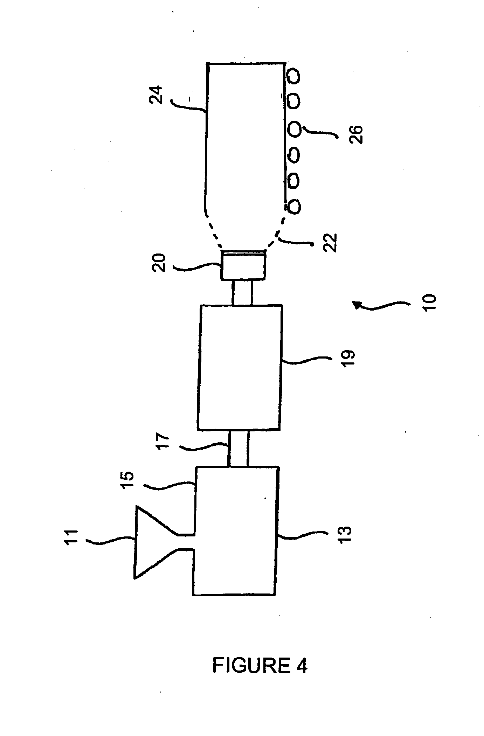

Figure 4 is a schematic flow diagram of an overall sequence of operations involved in the manufacture of an extruded foam board or plank according to one embodiment of the present invention.

While the invention is capable of various modifications and alternative forms, specific embodiments thereof have been shown by way of example in the drawing and will herein be described in detail. It should be understood, however, that it is not intended to limit the invention to the particular forms disclosed but, on the contrary, the intention is to cover all modifications, equivalents, and alternatives falling within the spirit and scope of the invention as defined by the appended claims.

### DESCRIPTION OF ILLUSTRATIVE EMBODIMENTS

The effectiveness of a blowing agent depends on its solubility in the polymer and its ability to expand the polymer-blowing agent solution when such a solution is subjected to thermodynamic instability such as when the solution exits a die attached to an extruder (to provide the extrudate) or when the blowing agent laden polymer is rapidly heated. The expansion of the polymer-blowing agent solution depends on the difference between the glass transition temperature of the thermoplastic polymer Tg and the boiling point of the blowing agent Tb. In general, the solubility of the blowing agent in the polymer depends on the difference between Tg and Tb (Tg-Tb); the smaller the difference the higher the solubility. Since volatility follows an inverse relationship with Tb, it is understood that at the same conditions of temperature and pressure, a higher volatility blowing agent will have lower solubility compared to a lower volatility blowing agent. As such, by blending a lower volatility blowing agent with a higher volatility blowing agent, a foaming formulation with optimized solubility and expandability characteristics can be developed. Furthermore, by blending a currently used VOC or HAP blowing agent with a non-VOC and non-HAP blowing agent of similar volatility, the emissions can be reduced without sacrificing the solubility and expandability characteristics.

The foams and processes of the present invention employ blowing agent(s) to achieve a stable thermoplastic polymer foam. The preferred blowing agent used in the present invention includes methyl formate, which is non-VOC and non-HAP, and has zero ODP. Hence, eliminating HAPs and minimizing the propensity to smog formation from the manufacturing process and the foam resulting therefrom is not only environmentally friendly, but also avoids solubility and expandability characteristics can be developed. Furthermore, by blending a currently used VOC or HAP blowing agent with a non-VOC and non-HAP blowing agent of similar volatility, the emissions can be reduced without sacrificing the solubility and expandability characteristics.

The foams and processes of the present invention employ blowing agent(s) to achieve a stable thermoplastic polymer foam. The blowing agent used in the present invention includes methyl formate, which is non-VOC and non-HAP, and has zero ODP. Hence, eliminating HAPs and minimizing the propensity to smog formation from the manufacturing process and the foam resulting therefrom is not only environmentally friendly, but also avoids many of the disadvantages of currently employed blowing agent compositions and processes. Thus, methyl formate alone or in combination with one or more suitable blowing agents having similar environmental attributes and, additionally, low thermal conductivity, can help offset the harmful environmental impacts (ODP, HAP, VOC) associated with the blowing agents in current use.

Resins that can be foamed in accordance with the present invention include melt processable thermoplastic polymers such as alkenyl aromatic polymers, polyolefins, polycarbonates, polyacrylates, and others. The term thermoplastic polymer includes both amorphous and semi-crystalline polymers. Examples of amorphous thermoplastic polymers include but are not limited to polystyrene, polycarbonate, poly(methyl methacrylate) and poly(phenylene oxide). Examples of semi-crystalline thermoplastic polymers include but are not limited to polyethylene, polypropylene, syndiotactic-polystyrene, poly(ethylene terephthalate).

An embodiment of the present invention relates to alkenyl aromatic polymers. The term "alkenyl aromatic polymer" as used herein, includes polymers of aromatic hydrocarbon molecules that contain an aryl group joined to an olefinic group with only double bonds in the linear structure, such as styrene, or styrene homologs such as α-methylstyrene, o-, m- and p-methylstyrene, α-ethylstyrene, o-, m-, p-ethylstyrene, 2, 4-dimethylstyrene, α-vinylxylene, and vinyl toluene. Alkenyl aromatic polymers also include homopolymers of styrene or styrene homologs (commonly referred to as polystyrene), copolymers of styrene, and rubber-toughened polystyrene (commonly referred to as high impact polystyrene, HIPS). With respect to a styrene copolymer, the comonomer generally can be any other ethylenically unsaturated material such as the conjugated 1,3-dienes, *e.g*., butadiene, isoprene, alpha-beta-unsaturated monocarboxylic acids and derivatives thereof, *e.g*., acrylic acid, methyl acrylate, ethyl acrylate, butyl acrylate, 2-ethylhexyl acrylate, and the corresponding esters of methacrylic acid, acrylamide, methacrylamide, acrylonitrile, and methacrylonitrile. If desired, blends of a styrene polymer with other polymers can be employed, *e.g*., blends of a styrene polymer with polyphenylene oxide. Preferably, the copolymers contain a predominant portion of styrene, for example greater than about 50 wt% styrene, and more preferably greater than 75% styrene.

The blowing agent is a blend including less than 100 mol% methyl formate, and further including at least one co-blowing agent. It is contemplated that more than one co-blowing agent can be employed in the blowing agent blend. Such co-blowing agent(s) can be physical, chemical or combinations thereof. The composition of the blowing agent blend depends on the foamed structure being prepared. In one embodiment, when the foamed structure is a sheet or expandable bead, the blowing agent blend includes from about 1 mol% to about 100 mol% methyl formate. In another embodiment, however, when the foamed structure is an expandable bead, a sheet, a board or plank, the blowing agent blend includes from about 1 mol% to about 99 mol% methyl formate, and at least one co-blowing agent.

Such co-blowing agent(s) can be physical, chemical or combinations thereof. The co-blowing agent generally is either fast expanding or has similar expansion characteristics as compared to pure methyl formate. The co-blowing agent can be an organic compound or an inorganic compound. Preferably, the co-blowing agent is a non-VOC. Still preferably, the co-blowing agent is a non-HAP. More preferably, the co-blowing agent is both a non-VOC and a non- HAP. Some non-limiting examples of physical co-blowing agents include, but are not limited to, inorganic agents, organic agents (*e.g*. hydrocarbons, halogenated hydrocarbons, ethers, esters, acetals, alkanols, carbonates, amines and ketones), or any combination thereof.

Some suitable inorganic physical blowing agents include, but are not limited to, carbon dioxide, water, air, nitrogen, argon, xenon, sulfur hexafluoride, nitrous oxide, ammonia, silicon tetrafluoride, nitrogen trifluoride, boron trifluoride, and boron trichloride, or any combination thereof. In one currently preferred embodiment, the inorganic agent is an inorganic gas such as carbon dioxide, nitrogen, argon, and air. A currently preferred inorganic gas is carbon dioxide. In another currently preferred embodiment, the inorganic agent is water.

Some examples of organic physical co-blowing agents that can be used in the present invention include, but are not limited to, hydrocarbons, halogenated hydrocarbons, fluids with polar groups such as ethers, esters, acetals, carbonates, alkanols, amines and ketones, and combinations thereof. Examples of hydrocarbons include, but are not limited to, methane, ethane, propane, cyclopropane, normal- or iso-butane, cyclobutane, neopentane, normal- or iso-pentane, and cyclopentane or any combination thereof. Examples of currently preferred halogenated hydrocarbons include, but are not limited to, methyl fluoride, difluoromethane (HFC-32), trifluoromethane (HFC-23), perfluoromethane, chlorodifluoromethane (HCFC-22), methylene chloride, ethyl chloride, ethyl fluoride, 1,2-difluoroethane (HFC-152), 1,1-difluoroethane (HFC-152a), 1,1,1-trifluoroethane (HFC-143a), 1,1,1,2-tetrafluoroethane (HFC-134a), pentafluoroethane (HFC-125), perfluoroethane, 1,1 -dichloro-1 -fluoroethane (HCFC-141b), 1-chloro-1,1-difluoroethane (HCFC 142b), 1,1-dichloro-2,2,2-trifluoroethane (HCFC-123), and 1-chloro-1,2,2,2-tetrafluoroethane (HCFC-124), difluoropropane, 1,1,1-trifluoropropane, 1,1,1,3,3-pentafluoropropane (HFC-245fa), 1,1,1,2,3,3-hexafluoropropane (HFC-236ea), 1,1,1,2,3,3,3-heptafluoropropane (HFC-227ea), perfluoropropane, 2,2,4,4,4-pentafluorobutane (HFC-365mfc), perfluorobutane, perfluorocyclobutane, and vinyl fluoride, or any combination thereof. Fluids with polar groups include but are not limited to ethers such as dimethyl ether, vinyl methyl ether, methyl ethyl ether, dimethyl fluoroether, diethyl fluoroether, and perfluorotetrahydrofuran; amines such as dimethylamine, trimethylamine and ethylamine; ketones such as acetone and perfluoroacetone; esters such as ethyl formate and methyl acetate; acetals such as methylal; carbonates such as dimethyl carbonate; alkanols such as ethanol and isopropanol, or any combination thereof. Currently preferred organic physical co-blowing agents are hydrocarbons containing four or five carbon atoms, HCFC-142b, and HFC-134a.

Chemical co-blowing agents are compounds which undergo a chemical reaction, for example decomposition to produce an inorganic gas such as CO₂ or N₂ and CO. Non-limiting examples of suitable chemical co-blowing agents include azodicarbonamide, azodiisobutyronitrile, benzenesulfonylhydrazide, 4,4'-oxybis(benzene sulfonylhydrazide), p-toluene sulfonyl semicarbazide, barium azodicarboxylate, N,N'-dimethyl-N,N'-dinitrosoterephthalamide, trihydrazino triazine, and other azo, N-nitroso, carbonate, and sulfonyl hydrazides. There are also various acid/bicarbonate mixtures that decompose into gases when heated. For example, mixtures of citric acid and sodium bicarbonate sold under the name HYDROCEROL ® can be employed as chemical co-blowing agents.

The total amount of the blowing agent in the polymeric formulation used to prepare the thermoplastic polymer foam structures depends on conditions such as temperature and pressure under which the blowing agent is dissolved in the polymer, the chemical and thermophysical characteristics of the blowing agent being used, and the desired density and associated properties such as insulation value, weight to strength ratio, and compressive strength of the foamed article. The polymeric formulation or foaming formulation is defined herein as including the blowing agent(s), polymer resin(s), and any additives. For a foam having a density of from about 1 to about 15 1b/ft³ (0.016 to 0.240 g/cm³), the formulation typically includes from about 18 to about 1 wt% of blowing agent.

The blowing agent used in the present invention includes 100% methyl formate, or the blowing agent can be a blend including 99 mol% or less methyl formate in combination with one or more co-blowing agent(s), which can be a physical co-blowing agent, a chemical co-blowing agent, or a combination thereof. The blowing agent blend generally includes from about 1 mol % to about 99 mol% methyl formate, for example from about 5 mol% to about 75 or 80 mol% methyl formate, or from about 20 mol% to about 80 mol% methyl formate. The blowing agent blend more typically includes from about 20 or 25 mol% to about 60 mol% methyl formate. More specifically, the blowing agent blend preferably includes from about 20 or 25 mol% to about 50 mol% methyl formate.

If provided, the blowing agent blend generally includes at least about 20 or 25 mol% of co-blowing agent(s). The blowing agent blend more typically includes from about 80 or 75 mol% to about 40 mol% of co-blowing agent(s). More specifically, the blowing agent blend preferably includes from about 80 or 75 mol% to about 50 mol% of co-blowing agent(s).

For example, and in accordance with a preferred embodiment of the present invention, the blowing agent blend includes from about 30 mol% to about 50 mol% methyl formate, and from about 70 mol% to about 50 mol% co-blowing agent.

A nucleating agent or combination of such agents can be employed in the polymeric foaming formulation for advantages such as its capability for regulating cell formation, morphology, and performance characteristics of the foamed article. The amount of nucleating agent used depends upon the desired cell size, the selected blowing agent blend, and the desired foam density, and performance characteristics of the foamed article. The nucleating agent is generally added in amounts from about 0.02 to about 2.0 wt% of the polymer resin formulation.

Some contemplated nucleating agents include inorganic materials (in small particulate form, preferably, with high aspect ratio (>20) and particle size in the micrometer to sub-micrometer range), such as clay, talc, silica, and diatomaceous earth. For example, talc can be used from about 0.25 to about 2.0 wt% of the polymer formulation. Other examples of nucleating agents include organic nucleating agents that decompose or react at the elevated temperatures to evolve gases, such as carbon dioxide and/or nitrogen. One example is a combination of an alkali metal salt of a polycarboxylic acid with a carbonate or bicarbonate. Some examples of alkali metal salts of a polycarboxylic acid include, but are not limited to, the monosodium salt of 2,3-dihydroxy-butanedioic acid (commonly referred to as sodium hydrogen tartrate), the monopotassium salt of butanedioic acid (commonly referred to as potassium hydrogen succinate), the trisodium and tripotassium salts of 2-hydroxy-1,2,3-propanetricarboxylic acid (commonly referred to as sodium and potassium citrate, respectively), and the disodium salt of ethanedioic acid (commonly referred to as sodium oxalate), or polycarboxylic acid such as 2-hydroxy-1,2,3-propanetricarboxylic acid. Some examples of a carbonate or a bicarbonate include, but are not limited to, sodium carbonate, sodium bicarbonate, potassium carbonate, potassium bicarbonate, and calcium carbonate.

It is contemplated that mixtures of different nucleating agents can be added in the present invention. Some more desirable nucleating agents include talc, crystalline silica, and a stoichiometric mixture of citric acid and sodium bicarbonate (the stoichiometric mixture having a 1 to 100 percent concentration where the carrier is a suitable polymer). Talc can be added in a carrier or in a powder form.

If desired, a flame retardant can also be employed in the present invention. Non-limiting examples of flame retardants include bromine compounds, chloroparaffins and other chlorine compounds, antimony trioxide, and alumina trihydrates.

Further, if desired, fillers, colorants, light and heat stabilizers, anti-oxidants, acid scavengers, stability control agents, processing aids, extrusion aids and foaming additives can be used in making the foam.

Any of the variety of suitable extrusion system or other methods known in the art for dissolving blowing agent in polymers can be used in accordance with the present invention. One example of a suitable system and method includes, for example, a conventional two-extruder tandem system with each extruder having a single screw. Alternatively, a two-extruder tandem system in which the primary extruder is a twin screw, and the secondary extruder is a single screw can be used for extruding the foam article of the present invention. A single extruder with proper cooling can also be employed in the present invention.

According to one process of the present invention, thermoplastic polymer pellets (*e.g*., polystyrene) are admixed with a nucleating agent, such as talc. These materials are continuously fed into a hopper of an extruder. The feed mixture is conveyed forward by a screw within a barrel of the extruder as the components are mixed, compressed, heated, and converted to molten form. The conversion to molten form occurs prior to reaching an injection zone where the blowing agent is added. The blowing agent(s) of the present invention can be injected into the polymer formulation at a point where the polymer is in a melt state (*i.e.,* beyond the feed zone). Each of the components of the blowing agent blend can be individually injected, either sequentially or simultaneously and in any order, into the polymer melt. Alternatively, the components of the blowing agent blend can be pre-mixed and the blend injected into the polymer melt. If a two-extruder tandem system is used, the blowing agent(s) can be injected either in the primary or the secondary extruder or some components of the formulation can be injected in the primary extruder and the remaining components in the secondary extruder.

After injecting the blowing agent, the various components in the extruder are continuously mixed to ensure a homogeneous solution of the polymer and the blowing agent. The molten solution is then conveyed into a cooling zone where additional mixing takes place. After cooling, the solution is extruded into a holding zone maintained at a temperature and pressure that prevents or inhibits foaming of the solution. The holding zone has (a) an outlet die having an orifice opening into a zone of lower pressure such as atmospheric pressure, (b) means for closing the orifice without disturbing the foamable solution within the holding zone, and (c) opening means for allowing the foamable solution to be ejected from the holding zone. An example of a holding zone is described in U.S. Patent No. 4,323,528. Regardless of whether a holding zone is used, the solution is then extruded through a die into a lower pressure zone, such as atmospheric pressure. On exit, the extrudate is either allowed to foam or is immediately quenched to low temperatures (*e.g*., by contacting the extrudate with a heat exchange fluid such as water) and the solidified extrudate is chopped into small beads that can be expanded into foam structure at a later time if desired.

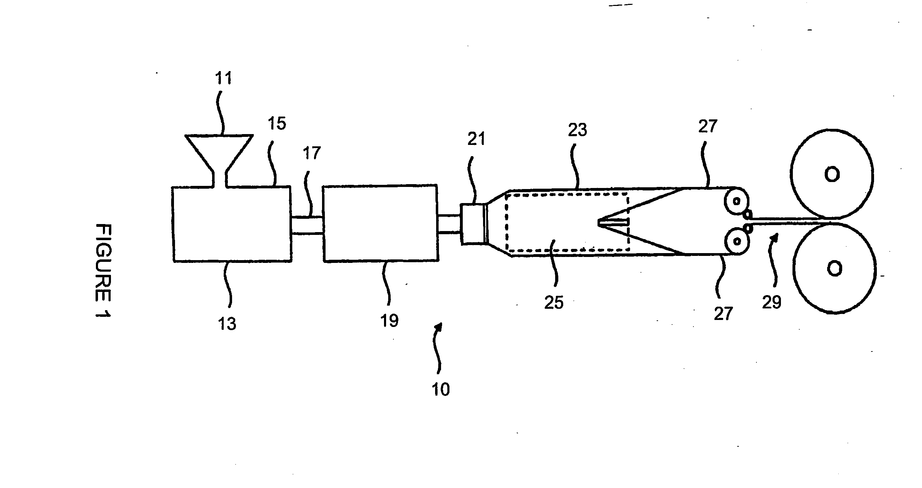

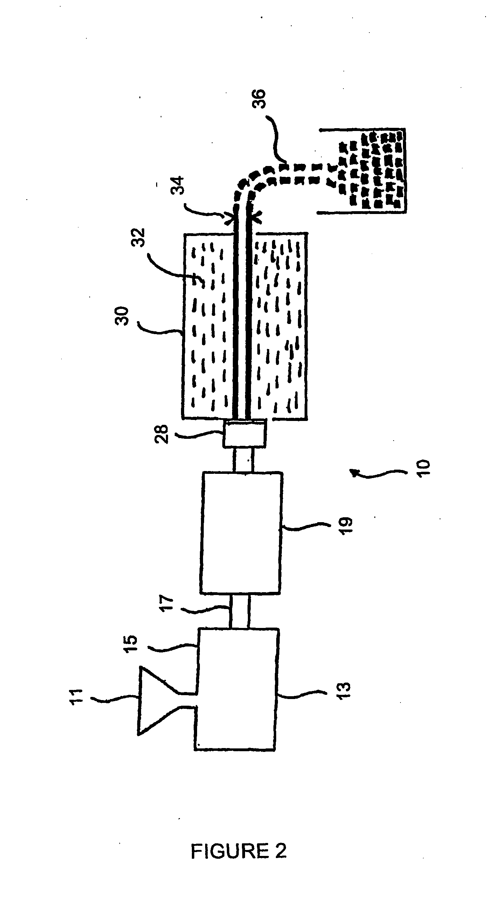

According to one embodiment as applied to alkenyl aromatic polymers such as polystyrene, a two-extruder tandem system 10 can be used for extruding a foam article (*e.g*., a sheet) of the present invention as depicted in Figure 1, or for making expandable beads as depicted in Figure 2. Polymer resin pellets are mixed with one or more additives (*e.g*., a nucleating agent) to form a feed mixture which is fed continuously into a hopper 11 of a primary extruder 13. The feed mixture is conveyed forward by a helical screw within the barrel of the primary extruder as the feed components are mixed, compressed, heated, and melted prior to reaching the blowing agent-injection zone. The blowing agent is added at point 15. Thus, the blowing agent of the present invention is injected at a point beyond the feed zone where the polymer exists in the melt state. If desired, the blowing agent can be injected at other locations beyond the feed zone, including into the secondary extruder.

Following injection of the blowing agent, the components are continuously mixed in the primary extruder 13. The exit pressure of the primary extruder 13 of the exemplary embodiment is generally in the range of from about 1500 to about 4000 psi (10.3 MPa to 27.6 MPa). The temperature of the primary extruder 13 of the exemplary embodiment is generally in the range of from about 390 to about 475°F (199 to 246 degrees Celcius). The mixture is subsequently passed, at a high enough pressure that the blowing agent remains in solution, through a hollow adapter section 17 into a cooled secondary tandem extruder 19. The molten mixture is passed along the length of the cooled secondary extruder at low shear where cooling and additional mixing occur. The exit pressure of the secondary extruder 19 of the exemplary embodiment is generally in the range of from about 1000 to about 2500 psi (6.9 MPa to 17.2 MPa). The temperature of the extrudate from the secondary extruder 19 of the exemplary embodiment is generally in the range of from about 240 to about 320°F (115 to 160 degrees Celcius). In general, the temperature of the primary extruder should be sufficient to melt the polymer and any organic additives, and to promote efficient mixing. The temperature and pressure in the secondary extruder should be sufficient to maintain a homogeneous solution of the components in the melt state. It is understood that the temperatures, pressures and other conditions described can vary depending on the properties of the thermoplastic polymer used in the process. The specific conditions to be used are apparent to a person of skill in the art.

As seen in Figure 1, for making foam sheet, the melt is then expressed through an annular die 21 in a low pressure zone in the form of an elongated bubble or tube 23, and the foamed polymer is drawn over a cylindrical surface of a cooling and sizing drum 25, and slit to form sheet stock 27, which is taken up on one or more winding reels 29.

Alternatively, as shown in Figure 2, for making expandable polymeric beads, the melt is expressed through a strand or rod die 28 into a low temperature zone 30 containing a heat transfer fluid 32 such as water. In this manner, the molten solution solidifies into strands, usually about 0.1 inch (0.254 cm) in diameter, without undergoing any expansion or foaming. The continuous strands then go through chopper 34 or any other cutting apparatus, and are cut into pellets (typically 0.1 inch × 0.1 inch (0.254 cm x 0.254 cm)) to form the so-called expandable beads 36.

In another embodiment, instead of using the continuous melt process as described in Figure 2, the expandable beads can be prepared with the blowing agent by exposing polymer pellets in the solid state to the blowing agent in a pressure vessel for a time up to the saturation limit. This saturation step can be carried out at a slightly elevated temperature to accelerate the impregnation of the blowing agent into the solid pellets. However, the temperature should not be too high to allow the impregnated pellets to stick together. In yet another method, the impregnation of the blowing agent can be accomplished by performing the polymer synthesis in the presence of the blowing agent, so as to dissolve, impregnate or entrap the blowing agent in the polymer.

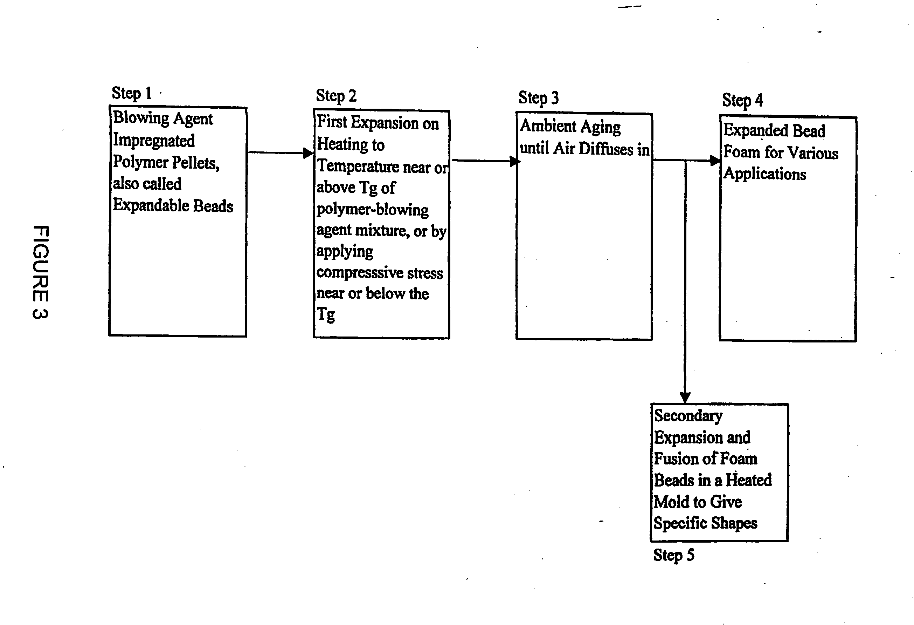

The expandable beads produced by any of the methods are then foamed as shown in Figure 3, Step 2, by rapidly heating the beads to a temperature near or above the Tg of the polymer-blowing agent system, *e.g*., by contacting the impregnated pellets with steam. The impregnated pellets can also be foamed at temperatures below Tg by applying mechanical pressure (compressive stress) to induce nucleation and growth of the cells as described in U.S. Patent 6,080,798. Regardless of the method used, the beads undergo rapid expansion to form foam beads (Step 2), which then undergo ambient aging (Step 3), for example by cooling the beads to ambient temperature, to allow air to diffuse into the foamed beads to stabilize the dimensions. These beads can be used as such, for example for loose fill packaging, as shown in Step 4. Alternatively, the expanded and aged beads can be fused together in a heated mold as shown in Step 5, to form products of any of a variety of different shapes such as cups, plates, molded packaging, containers, planks or boards. Further density reduction occurs during the molding operation with air and the residual blowing agent in the expanded bead providing further expansion.

In yet another configuration, as shown in Figure 4, the foamable formulation is expressed through a die of a different configuration such as a flat die 20 and allowed to expand in the form of a board or plank 24. The expanding extrudate 22 is moved forward by a set of rollers 26, and may be further directed to a shaping device before emerging as a board or plank 24.

Depending upon the materials and process used, the resulting foam article can be a bead, a sheet, a board, or a plank. The foam beads can be further molded to form a sheet, plank or board, or into articles of various shapes, sizes, and thickness. If the article produced is a sheet, the thickness of the sheet can be up to about 0.5 inch (1.27 cm). If the article produced is a plank or a board, the thickness is generally equal to or greater than about 0.5 inch (1.27 cm), preferably between 0.5 inch and 3 inches (1.27 cm to 7.62 cm).

For preparation of thermoplastic polymer foam sheets, the use of an annular die is preferred. The articles produced by extrusion through an annular die are generally less than about 0.5 inch (1.27 cm) in thickness, preferably from about 0.125 to about 0.438 inch (0.317 to 1.11 cm) in thickness. For preparation of thermoplastic polymer foam boards, *e.g*. insulation boards, the use of a flat die is preferred. The articles produced by extrusion through a flat die are generally at least about 0.5 inch (1.27 cm) in thickness. For example, and in a preferred embodiment, for insulating materials, the thickness is about 0.5 to about 3 inches (1.27 cm to 7.62 cm) in thickness. Such boards have particular utility as insulating materials, *e.g*. insulation boards or planks. Regardless of the type of die used or the foam produced, the extruded foam can be subjected to further expansion or density reduction by application of heat and/or vacuum.

The foam beads, sheets and boards or planks can be used as such, cut into other shapes, further shaped by application of heat and pressure, or otherwise machined or formed into shaped articles of desired size and shape as known in the art.

Depending upon the materials and process used, the resulting foamed article generally has a density from about 1 to about 15 1b/ft³ (0.016 to 0.240 g/cm³), with further density reduction achieved via secondary expansion by application of heat and/or vacuum. This is typically seen in foamed beads where densities less than 1.0 1b/ft³ (0.016 to 0.240 g/cm³) are achieved. A foamed sheet typically has a density from about 2.0 to about 9.0 1b/ft³ (0.016 to 0.240 g/cm³), while a foamed board used for insulation purposes typically has a density of about 1.5 to about 3.5 1b/ft³ (0.016 to 0.240 g/cm³). Furthermore, and in accordance with one preferred embodiment of the invention, the resultant foamed article has a substantially closed-cell structure and is defmed herein as a foam having greater than about 85% closed cells and, more typically, greater than about 95% closed cells. Alternatively, and in accordance with another aspect of the invention, the resultant foamed article can be formed with 15% or more open cells, for example 20%, 25%, 30% or more open cells. Furthermore, the resulting foam structure can be controlled to include at least about 25, 30, 35, 40, 45 or 50 cells per inch (approximately 10, 12, 14, 16, 18 or 20 cells per cm) for foam beads and sheets, and at least about 50, 55, 65, 75, 85, 95 or 100 cells per inch (approximately 20, 22, 24, 25.5, 30, 33 or 40 cells per cm) for extruded boards.

The term "R-value" refers to a unit of thermal resistance used for comparing insulating values of different materials, as is known in the art. Generally, the higher the R-value the better the insulation resists heat transfer. Many factors can affect the R-value of insulation, including the type of blowing agent used and the age of the foam. R-values are usually expressed in terms of a standard unit of thickness of the material. For example, R-values for foams can be measured per inch of foam thickness. Adequate insulating foams such as the foams of the present invention preferably have R-values of about 4.0 per inch (1.57 per cm) or greater. For example, and in a preferred embodiment, the insulating foams of the present invention have R-values per inch of greater than about 5 (1.96 per cm). The R value of the foams of the invention are determined by conventional methods, for example using ASTM C518.

The foams of the present invention can be used for insulation or as building materials, in various containers and packaging systems, or as protective or flexible packaging. Generally, extruded foam sheets are used in flexible as well as rigid packaging; extruded foam planks are used in protective packaging; extruded foam boards having a thickness greater than about 0.5 inch are used for insulation applications, for example as building materials; and foam beads are used for loose fill packaging, or are molded as sheets or planks or boards or contoured articles for flexible, protective, rigid, and insulation applications. In addition to foam sheets, planks and boards, the present invention can take the form of other shapes such as rods, tubes or contoured members.

Other uses for the foams of the present invention, as well as suitable processes, apparatus, equipment, devices and systems for the preparation thereof are described in United States Patents and published Applications 6,136,875, 5,149,473, 6,476,080, 6,599,946, 6,696,504, US 2004/0132844 and US 2004/0006149.

Dimensional stability is usually expressed in terms of % gauge change, which equals 100 × (aged gauge - initial gauge) / initial gauge, with initial gauge determined within 15 minutes of extrusion. The resulting foam of the present invention is desirably "dimensionally stable" in that the gauge of the foam after 7 days of aging does not change by more than about 15%, preferably not more than 10%, and more preferably not more than 5% from the gauge of the freshly extruded foam. Preferably, the foams of the invention have a dimensional change of less than about 4%, more preferably less than about 1% in any direction.

The following examples are presented in order to more fully illustrate certain embodiments of the invention. These example in no way, however, should be construed as limiting the broad scope of the invention. One skilled in the art can readily devise many variations and modifications of the principles disclosed herein without departing from the scope of the invention.

### Examples

### Example A

Various blowing agents were tested with the results shown below in Table 1. Specifically, various alkenyl aromatic polymer foam sheets were made from comparative blowing agents and inventive blowing agents in accordance with the extrusion process generally described herein. It should be noted that for the various examples reported in Table 1, each exemplary foam was made with the same polymer and the same hardware operated in exactly the same way; the only variable being the blowing agent. All of the inventive blowing agents included methyl formate; the comparative blowing agent(s) did not include methyl formate.
Each of the alkenyl aromatic polymer foams was made on a tandem extrusion line employing 2.5 inch and 3.5 inch (6.35 and 8.9 cm) single screw extruders and blowing agent was injected through a single port in the primary extruder. The polymer resin used was high heat general purpose polystyrene having a density of 1.05 g/cm³ and a melt flow rate of 1.6 g/10 min at 200°C under a load of 5 kg. In addition to the blowing agents and the polystyrene resin, talc was added in the amount of up to 2 wt% of the total foaming formulation including all the blowing agent(s), polymer resin(s), and additives. An annular die was used and the expanding extrudate was directed to a shaping system to form foam sheets. An example of suitable equipment for preparing the alkenyl aromatic polymer foam sheets is described in United States Patent 6,136,875.

**TABLE 1**

| Sample | Blowing Agen (s) Used (wt%) | | | | | | | | Talc | Densit y | Open Cell | Cell₄ Size | %Gauge Change⁵ | |
|---|---|---|---|---|---|---|---|---|---|---|---|---|---|---|
| Comp/Inv² | Ethane | Propane | Isobutane | an n-Butane | Isopentane | CO2 | MF³ | H20 | wt%¹ | lb/ft 3 (g/cm³) | % | JAM | I hour | 7 days |
| Comp 1 | | | | | 5.20 | | | | 1.8 | 00855 8) | 1.8 | 200 | 0.8 | 11.1 |
| Comp 2 | | | | | 3.96 | 0.77 | | | 1.0 | 4.7 (0.0752) | 1.0 | 196 | -7.9 | 12.9 |
| Comp 3 | | | | | | | 4.30 | | 1.9 | 8.1 (0.13) | 2.2 | 187 | -0.3 | 5.6 |
| Inv 2 | | | | | | 0.76 | 3.32 | | 0.5 | 5.6 (0.09) | 5.6 | 209 | -10.6 | -3.9 |
| Inv 3 | | | | | | 0.50 | 1.95 | 0.50 | 0.7 | (081368) | 23.5 | 170 | -0.3 | 21.7 |
| Inv 4 | 0.56 | | | | | | 3.52 | | 0.7 | 5.8 (0.093) | 2.2 | 234 | -1.1 | 4.7 |
| Inv 5 | 1.00 | | | | | | 2.40 | | 0.6 | 4.1 (0.066) | 1.8 | 179 | -0.1 | 7.6 |
| Inv 6 | | 1.22 | | | | 0.55 | 1.97 | | 0.5 | 4.4 (0.07) | 3.0 | 210 | -6.6 | 9.0 |
| Inv 7 | | 2.01 | | | | 0.37 | 1.21 | | 0.3 | (0.05 3.676) | 1.5 | 224 | 0.1 | 15.1 |
| Inv 8 | | 2.67 | | | | 0.34 | 0.34 | | 0.3 | 3.5 (0.056) | 3.5 | 254 | 0.6 | 9.5 |
| Inv 9 | | | 3.57 | | | 0.35 | 0.27 | | 1.0 | 4.1 (0.0661) | 1.8 | 194 | 0.1 | 11.9 |
| Inv 10 | | | 3.04 | | | 0.35 | 0.74 | | 1.0 | 4.0 (0.064) | 1.9 | 197 | -0.3 | 13.2 |
| Inv 11 | | | 2.65 | | | 0.31 | 1.17 | | 1.0 | 3.9 (0.062) | 0.9 | 166 | 0.5 | 13.7 |
| Inv 12 | | | 2.03 | | | 0.37 | 1.82 | | 1.0 | (04.98) .07 | 2.5 | 183 | -3.5 | 22.1 |
| Inv 13 | | | | | 2.79 | 0.78 | 1.00 | | 1.0 | 5.3 (0.085) | 3.0 | 180 | -5.5 | 10.7 |
| Inv 14 | | | | 2.63 | | 0.35 | 1.20 | | 1.4 | 4.7 (0.075) | 1.7 | 163 | -7.7 | 18.4 |

| | | | | | | | | | | | | | | |
|---|---|---|---|---|---|---|---|---|---|---|---|---|---|---|
| 1. wt% = (weight of a component)/(total weight of foaming composition including all the blowing agent(s), polymer resin(s), and additives) 2. Comp - comparative example; inv - inventive example 3. MF - methyl formate 4. The number of cells per inch of the extruded foam ranged from 210 to 420 (82 to 165 cells per cm). Cell size (expressed as diameter) was determined from scanning electron microscope image of the extruded sheet that has been aged at least 24 hours and then expanded in the z-direction (along the thickness direction) in a 240°F (115.5 °C) oil bath for 2 minutes, while being mechanically constrained in the x and y directions; the number of cells per inch in these further expanded samples ranged from 110 to 210 (43.3 to 82.5 per cm). | | | | | | | | | | | | | | |

All of the above foams of Table 1 were dimensionally stable because after having undergone aging for 7 days no further significant change in the gauge was noticed It is noted that all of the foams in Table 1, except for inventive example 2, showed post-extrusion growth. This unidirectional change is different from the conventionally used definition of dimensional stability whereby the foam can either shrink or expand with time. The formulations described herein provide stable foam structures produced by an environmentally friendly and cost-effective process. Furthermore, a variety of foams having suitable and desired characteristics can be formed in accordance with the present invention. For example, inventive formulation 3 contains the highest percentage of open cells, and is thus advantageous since the flammable properties of the foam are reduced as the percentage of open cells increases due to rapid loss of the flammable component(s) of blowing agent blend. In another example, inventive formulations 2 to 5 include components with the least and negligible impact on air quality. Comparative example 2 is a typical formulation widely used in making polystyrene foam sheet or expanded beads. Other variants of this formulation, again in wide use, are where isopentane is replaced with normal pentane or isobutane or normal butane. Inventive examples 6 to 14 demonstrate how foam sheet (and, by extension, expanded beads) with similar characteristics can be made using formulation where the use of the hydrocarbon VOC blowing agent is much reduced. A widely used blowing agent for making expanded beads is pentane, which has a boiling point of 36°C and a heat of vaporization of 25.8 kJ/mol at the boiling point; the corresponding values for methyl formate are 32°C and 27.9 kJ/mol, respectively. The combination of lower boiling point and higher heat of vaporization for methyl formate corresponds to higher volatility and thus gives better expansion than pentane. Consequently, partial or complete replacement of pentane with methyl formate leads to a significant reduction in VOC emissions during the expanded bead formation (Figure 3, Step 2) and molding (Figure 3, Step 5) operations, and from post-manufacturing operations such as foam or product storage.

Furthermore, it should be noted that the total number of moles of the blowing agent in all the formulations in Table 1 is the same (about 0.07 moles per 100 g of total material processed). The attainment of foams with different densities thus simply reflects the effective volatility of the blowing agent blend. It will be obvious to one skilled in the art that foams with lower densities can be obtained by changing the composition of the blowing agent blend and making it rich in the component(s) with higher volatility, and that the density can be further reduced by using more number of moles of the blowing agent. Each of the inventive formulations of Table 1 gives rise to a foam that is stable and easy to manufacture and handle.

### Example B

Various blowing agents for use in forming insulating foam planks or boards were tested with the results shown below in Table 2. Specifically, various alkenyl aromatic polymer foam boards useful for insulation applications were made from inventive blowing agent blends in accordance with the extrusion process generally described herein. It should be noted that for the various examples reported in Table 2, each exemplary foam board was made with the same hardware operated in exactly the same way; the only variable being the composition of the blowing agent blend and the relative percentages of the polystyrene polymer. All of the inventive blowing agent blends include methyl formate in combination with the co-blowing agent HFC-134a.

Each of the alkenyl aromatic polymer foams was made on a tandem extrusion line employing 1.0" and 1.5" (2.54 cm and 3.81 cm) single-screw extruders equipped with three ports in the primary extruder for injecting compressed fluids. The output rate was 10 lb/hr (4.54 kg/h). The polymer samples used were high heat general purpose polystyrene having a melt flow rate of 1.6 (PS1), high heat general purpose polystyrene having a melt flow rate of 11 (PS2), and polystyrene reclaimed from Applicant's commercial insulation board process having a melt flow rate of 11.5 (PS3). Talc was added in the amount up to about 2.5% of the amount of virgin polystyrene (PS 1+PS2). A flat die was used and the expanding extrudate was directed to a shaping system to form foam boards with nominal dimensions of 5.0 " (width) × 0.5 " (thickness) (12.7 cm (width) x 1.27 cm (thickness)). The adjustable shaping device used can be configured to create a preferential orientation of the cells in the normal direction, as seen in Table 2.

Table 2 provides various exemplary formulations used to prepare insulating foam boards from an extrudate including polystyrene , talc, methyl formate, HFC-134a and optionally CO₂, in accordance with the present invention. Additionally, Table 2 provides the melt temperature of each of the foaming formulations prior to extrusion. Table 2 also provides the density, R-value, and cell size of the corresponding board or plank formed from the various exemplary formulations.

**TABLE 2**

| *Example* | *Comp3* | *Inv 2* | *Inv 3* | *Inv 4* | *Inv 5* | *Inv 6* | *Inv 7* | *Inv 8* |
|---|---|---|---|---|---|---|---|---|
| PS1 (wt%)¹ | 99.00 | 66.00 | 66.00 | 66.00 | 66.00 | 66.00 | 66.00 | 50.00 |
| PS2 (wt%)¹ | 0.00 | 32.35 | 0.00 | 0.00 | 0.00 | 0.00 | 0.00 | 0.00 |
| PS3 (wt%)¹ | 0.00 | 0.00 | 32.35 | 32.35 | 32.68 | 32.68 | 32.68 | 50.00 |
| Talc (wt%)¹ | 1.00 | 1.65 | 1.65 | 1.65 | 1.32 | 1.32 | 1.32 | 0.00 |
| Methyl Formate (pph)² | 2.42 | 2.61 | 3.42 | 4.72 | 4.07 | 4.24 | 3.95 | 3.73 |
| HFC-134a (pph)² | 2.01 | 2.73 | 5.17 | 4.72 | 3.99 | 5.50 | 6.17 | 5.83 |
| CO₂ (pph)² | 0.00 | 0.00 | 0.00 | 0.00 | 0.36 | 0.00 | 0.00 | 0.00 |
| Melt temp (°C)³ | 149 | 141 | 131 | 121 | 122 | 121 | 120 | 121 |
| Fresh Density (pcf) | 3.88 | 3.15 | 2.70 | 2.52 | 2.67 | 2.67 | 2.86 | 2.70 |
| [g/cm³]^{4'5} | [0.062] | [0.050 | [0.043] | [0.040] | [0.043] | [0.043] | [0.045] | [0.043] |
| Fresh R-Value (/inch) | 5.31 | 5.80 | 5.82 | 6.11 | 5.82 | 6.02 | 6.15 | 6.10 |
| [/cm]^{4'6} | [2.09] | [2.28] | [2.29] | [2.40] | [2.29] | [2.37] | [2.42] | [2.40] |
| 7-day₆ R-value (/inch) | 4.36[1.71] | 4.63 | 4.64 | 4.78 | 4.65 | 4.84 | 5.01 | 4.94 |
| Ucm] | | [1.82] | [1.82] | [1.88] | [1.83] | [1.90] | [1.97] | [1.94] |
| Cell size,MD(mm)^{7'8} | 0.222 | 0.181 | 0.221 | 0.246 | 0.223 | 0.212 | 0.192 | 0.236 |
| Cell size, TD (mm)^{7'8} | 0.245 | 0.224 | 0.234 | 0.223 | 0.229 | 0.197 | 0.267 | 0.285 |
| Cel lsize,ND(mm)^{7'8} | 0.274 | 0.221 | 0.258 | 0.259 | 0.253 | 0.217 | 0.245 | 0.250 |
| | | | | | | | | |
| 1. wt% = weight of component / weight of (PS 1 + PS2 + PS3 + talc) | | | | | | | | |
| 2. pph = parts blowing agent component per hundred parts of (PS1 + PS2 + PS3 + talc) | | | | | | | | |
| 3. The temperature just before the foaming formulation enters the die | | | | | | | | |
| 4. Fresh measurements made within 15 minutes of extrusion | | | | | | | | |
| 5. Determined by measuring dimensions and mass of a nominal 4" x 15" x 0.5" (10.2 cm x 38.1 cm x 1.27 cm) sample | | | | | | | | |
| 6. R is in ft².hr.°F/Btu ( = 0.489 cm².h.°C/J). Thermal resistivity determined using ASTM | | | | | | | | |
| 7. Cell size determined using ASTM D3576 | | | | | | | | |
| 8. MD, TD, and ND - machine, transverse, and normal direction, respectively | | | | | | | | |

All of the foam boards of Table 2 were dimensionally stable. The dimensions were measured within 15 minutes of extrusion and then after 14 and 28 days. The change in any given dimension was less than 1% and the overall change in density with respect to the fresh density was within 2%.

In accordance with another aspect of the present invention, and in addition to the benefits of using methyl formate as a blowing agent previously set forth, such as offsetting the undesired impact associated with blowing agents in current use, the use of methyl formate provides an additional advantage. Namely, methyl formate escapes the foam quite rapidly. About 12% of the methyl formate escaped the 0.5" (1.27) thick board within the first 3 hours following extrusion, and none was detected after 30 days using a limit of detection of 500 ppm. Because methyl formate is the only flammable component of the blowing agent blends shown in Table 2, no flame retardant is necessary in the polymeric foaming formulation. Ethane can be substituted for CO₂. Although ethane is flammable, it also escapes the foam matrix rapidly, again not requiring the use of flame retardant.

### Example C

Various blowing agents for use in forming insulating foam planks or boards were tested with the results shown below in Table 3. Specifically, various alkenyl aromatic polymer foam boards useful for insulation applications were made from comparative blowing agent and inventive blowing agent blends, in accordance with the extrusion process generally described herein. The comparative blowing agent blend includes ethyl chloride - a VOC and HAP blowing agent, in combination with the non-VOC co-blowing agent HCFC-142b, and the inventive blowing agent blend includes methyl formate, a non-VOC and non-HAP blowing agent, in combination with HCFC-142b.

It should be noted that for the various examples reported in Table 3, each exemplary foam board was made with the same hardware operated in exactly the same way; the only variable being the composition of the blowing agent blend. Each of the alkenyl aromatic polymer foams was made on a tandem extrusion line employing 1.0" and 1.5" (2.54 cm and 3.81 cm) single-screw extruders equipped with three ports in the primary extruder for injecting compressed fluids. The output rate was 10 lb/hr (4.54 kg/h). The polymer samples used were high heat general purpose polystyrene having a melt flow rate of 1.6 (PS 1), and reclaimed polystyrene from Applicant's commercial insulation board process having a melt flow rate of 11.5 (PS3). Talc was added in the amount of about 2.0% of the amount of polystyrene (PS 1+PS3). A flat die was used and the expanding extrudate was directed to a shaping system to form foam boards with nominal dimensions of 5.0 " (width) 0.5 " (thickness) (12.7 cm (width) x 1.27 cm (thickness)).

Table 3 provides various exemplary inventive formulations used to prepare insulating foam boards from an extrudate including polystyrene, talc, methyl formate and HFC-142b, in accordance with the present invention. Also shown are several comparative formulations including polystyrene, talc, ethyl chloride and HFC-142b. Additionally, Table 3 provides the melt temperature of each of the comparative and inventive foaming formulations prior to extrusion. Table 3, also provides the density, R-value, and cell size of the corresponding board or plank formed from the various exemplary comparative and inventive formulations.

**TABLE 3**

| *Example* | *Comp* | *Comp* | *Comp* | *Comp* | *Comp* | *Inv* | *Inv* | *Inv* | *Inv* | *Inv* |
|---|---|---|---|---|---|---|---|---|---|---|
| PS1 (wt%)¹ | 58.00 | 58.00 | 58.00 | 58.00 | 58.00 | 58.00 | 58.00 | 58.00 | 58.00 | 58.00 |
| PS3 (wt%)¹ | 38.00 | 38.00 | 38.00 | 38.00 | 38.00 | 38.00 | 38.00 | 38.00 | 38.00 | 38.00 |
| FR (wt%)¹ | 2.00 | 2.00 | 2.00 | 2.00 | 2.00 | 2.00 | 2.00 | 2.00 | 2.00 | 2.00 |
| Talc (wt%)¹ | 2.00 | 2.00 | 2.00 | 2.00 | 2.00 | 2.00 | 2.00 | 2.00 | 2.00 | 2.00 |
| Ethyl Chloride (pph)² | 2.35 | 2.58 | 2.68 | 2.69 | 2.81 | 0.00 | 0.00 | 0.00 | 0.00 | 0.00 |
| Methyl Formate (pph)² | 0.00 | 0.00 | 0.00 | 0.00 | 0.00 | 2.17 | 2.35 | 2.63 | 2.61 | 2.92 |
| HCFC-142b (pph)² | 5.48 | 6.01 | 6.24 | 6.27 | 6.43 | 5.64 | 6.06 | 6.68 | 6.64 | 6.74 |
| Melt temp (°C)³ | 127 | 127 | 127 | 126 | 126 | 133 | 136 | 136 | 126 | 126 |
| Fresh Density (pcf) | 2.31 | 2.29 | 2.12 | 2.02 | 2.12 | 2.23 | 2.12 | 1.86 | 2.13 | 2.10 |
| [g/cm³]^{4,5} | [0.037] | [0.036] | [0.034] | [0.032] | [0.034] | [0.035] | [0.034] | [0.030] | [0.034] | [0.033] |
| Fresh R-Value (/inch) | 6.19 | 6.13 | 6.06 | 6.02 | 6.06 | 6.04 | 5.91 | 5.71 | 6.17 | 6.06 |
| [/cm]^{4,6} | [2.43] | [2.41] | [2.38] | [2.37] | [2.38] | [2.38] | [2.33] | [2.25] | [2.43] | [2.38] |
| 7-day R-value (/inch) [/cm]⁶ | 4.94 [1.94] | 4.96 [1.95] | 4.91 [1.93] | 4.85 [1.91] | 4.90 [1.93] | 4.76 [1.87] | 4.69 [1.85] | 4.57 [1.80] | 4.95 [1.95] | 4.85 [1.91] |
| Cell size, NM (mm)^{7,8} | 0.361 | 0.337 | 0.386 | 0.340 | 0.330 | 0.304 | 0.366 | 0.421 | 0.369 | 0.379 |
| Cell size, TD (mm)^{7,8} | 0.447 | 0.407 | 0.482 | 0.428 | 0.407 | 0.428 | 0.399 | 0.423 | 0.474 | 0.393 |
| Cell size, ND (mm)^{7,8} | 0.376 | 0.376 | 0.406 | 0.390 | 0.389 | 0.414 | 0.411 | 0.464 | 0.450 | 0.414 |
| | | | | | | | | | | |
| *Comp -* comparative example | | | | | | | | | | |
| *Inv -* inventive example | | | | | | | | | | |
| 1. wt% = weight of component / weight of (PS1 + PS3 + FR + Talc); | | | | | | | | | | |
| FR is flame retardant hexabromocyclododecane | | | | | | | | | | |
| 2. pph = parts blowing agent component per hundred parts of (PS 1 + PS3 + FR + Talc) | | | | | | | | | | |
| 3. The temperature just before the foaming formulation enters the die | | | | | | | | | | |
| 4. Fresh measurements made within 15 minutes of extrusion | | | | | | | | | | |
| 5. Determined by measuring dimensions and mass of a nominal 4" x 15" x 0.5" (10.2 cm x 38.1 cm x 1.27 cm) | | | | | | | | | | |
| sample . | | | | | | | | | | |
| 6. R is in ft².hr.°F/Btu (= 0.489 cm².h.^{o}C/J). Thermal resistivity determined using ASTM C518 | | | | | | | | | | |
| 7. Cell size determined using ASTM D3576 | | | | | | | | | | |
| 8. MD, TD, and ND - machine, transverse, and normal direction, respectively | | | | | | | | | | |

All of the foam boards of Table 3 were dimensionally stable. The dimensions were measured within 15 minutes of extrusion and then after 14 and 28 days. The change in any given dimension was less than 1% and the overall change in density with respect to the fresh density was within 2%.

The results presented in Table 3 demonstrate that the non-VOC methyl formate can replace hazardous blowing agents such as ethyl chloride, without sacrificing process efficiency and product characteristics, such as density, cell size and R-values. The inventive blowing agent blends thus offer significant advantages as compared with presently used blowing agent

The results presented in Table 3 demonstrate that the non-VOC methyl formate can replace hazardous blowing agents such as ethyl chloride, without sacrificing process efficiency and product characteristics, such as density, cell size and R-values. The inventive blowing agent blends thus offer significant advantages as compared with presently used blowing agent blends. Though Examples B and C have been described in terms of extruded boards, similar products can be made using expandable beads and the processes shown in Figures 2 and 3 without departing from the formulations shown in Tables 2 and 3. While the present invention has been described with reference to one or more particular embodiments, those skilled in the art will recognize that many changes can be made thereto without departing from the scope of the present invention. Each of these embodiments and obvious variations thereof is contemplated as falling within the scope of the claimed invention, which is set forth in the following claims.

## Claims

1. An expandable polymeric formulation for the preparation of an expanded alkenyl aromatic polymer foam structure, the formulation comprising: a thermoplastic alkenyl aromatic polymer and a blowing agent blend, the blowing agent blend comprising methyl formate and at least one co-blowing agent, wherein the formulation is in the form of expandable beads.

2. The expandable polymeric formulation of claim 1, wherein the blowing agent blend comprises 5 to 80 mole percent of methyl formate and at least one co-blowing agent.

3. The expandable polymeric formulation of claim 2, wherein the blowing agent blend comprises 30 to 50 mole percent of methyl formate and at least one co-blowing agent.

4. The expandable polymeric formulation of claim 1, wherein the at least one co-blowing agent is a physical co-blowing agent, a chemical co-blowing agent, or a combination thereof.

5. The expandable polymeric formulation of claim 4, wherein the at least one co-blowing agent is a physical co-blowing agent selected from the group consisting of an inorganic agent, a hydrocarbon, a halogenated hydrocarbon, an ether, an ester, an acetal, an alkanol, a carbonate, an amine, a ketone, and any combination thereof.

6. The expandable polymeric formulation of claim 5, wherein the at least one co-blowing agent is selected from the group consisting of a hydrocarbon containing four or five carbon atoms, 1,1,1,2-tetrafluoroethane (HFC-134a) and 1-chloro-1,1-difluoroethane (HCFC-142b).

7. The expandable polymeric formulation of claim 5, wherein the at least one co-blowing agent selected from the group consisting of ethane, propane, cyclopropane, normal-butane, isobutane, cyclobutane, neopentane, isopentane, cyclopentane, carbon dioxide and water.

8. The expandable polymeric formulation of claim 6, wherein the at least one co-blowing agent is selected from the group consisting of a hydrocarbon containing five carbon atoms and 1,1,1,2-tetrafluoroethane (HFC-134a).

9. The expandable polymeric formulation of claim 7, wherein the at least one co-blowing agent is carbon dioxide.

10. The expandable polymeric formulation of claim 1, wherein the alkenyl aromatic polymer includes polystyrene.

11. An expanded alkenyl aromatic polymer foam structure formed by:
preparing an expandable polymeric formulation in the form of expandable beads, the formulation including a thermoplastic alkenyl aromatic polymer and a blowing agent blend, the blowing agent blend comprising methyl formate and at least one co-blowing agent;
expanding the expandable beads; and
fusing the expandable beads together to form the expanded alkenyl aromatic foam structure.

12. The alkenyl aromatic polymer foam structure of claim 11, wherein the expandable beads are formed by a process selected from the group consisting of (a), (b), and (c):
a.
(i) melting a thermoplastic alkenyl aromatic polymer;
(ii) mixing an effective amount of the blowing agent blend in the alkenyl aromatic polymer to define a mixture; and
(iii) extruding the mixture into a low temperature zone to form the expandable beads;
b. dissolving an effective amount of the blowing agent blend into the alkenyl aromatic polymer;
c. synthesizing the alkenyl aromatic polymer in the presence of the blowing agent-blend.

13. The alkenyl aromatic polymer foam structure of claim 11, wherein the step of expanding the beads includes:
heating the beads to a temperature at least at or above the glass transition temperature of the polymer-blowing agent formulation; or
subjecting the beads to an external compressive stress at a temperature up to the glass transition temperature of the polymer-blowing agent formulation.

14. The alkenyl aromatic polymer foam structure of claim 11, wherein the blowing agent blend comprises 20 to 50 mole percent methyl formate, and at least one co-blowing agent.

15. The alkenyl aromatic polymer foam structure of claim 11, wherein the at least one co-blowing agent is a physical co-blowing agent, a chemical co-blowing agent, or a combination thereof.

16. The alkenyl aromatic polymer foam structure of claim 15, wherein the at least one co-blowing agent is a physical co-blowing agent selected from the group consisting of an inorganic agent, a hydrocarbon, a halogenated hydrocarbon, an ether, an ester, an acetal, an alkanol, a carbonate, an amine, a ketone, and any combination thereof.

17. The alkenyl aromatic polymer foam structure of claim 16, wherein the at least one co-blowing agent is selected from the group consisting of a hydrocarbon containing four or five carbon atoms, 1,1,1,2-tetrafluoroethane (HFC-134a) and 1-chloro-1,1-difluoroethane (HCFC-142b).

18. The alkenyl aromatic polymer foam structure of claim 11, wherein the alkenyl aromatic polymer includes polystyrene.

19. The alkenyl aromatic polymer foam structure of claim 11, wherein the alkenyl aromatic polymer foam has a density of about 1 to 15 lb/ft³ (0.016 to 0.240 g/cm³).

20. The alkenyl aromatic polymer foam structure of claim 11, wherein the alkenyl aromatic polymer foam structure is an insulating foam having a thickness of at least about 0.5 inch (1.27 cm) and an R value of about 4 per inch (1.57 per cm) or greater.

21. The alkenyl aromatic polymer foam structure of claim 11, wherein the alkenyl aromatic polymer foam structure is a substantially closed-cell structure.

22. A process for making an expanded alkenyl aromatic polymer foam structure including:
preparing an expandable polymeric formulation in the form of expandable beads, the formulation including a thermoplastic alkenyl aromatic polymer and a blowing agent blend, the blowing agent blend comprising methyl formate and at least one co-blowing agent, and
expanding the formulation to form the expanded alkenyl aromatic foam structure.

23. The process of claim 22, wherein the expandable beads are formed by a process selected from the group consisting of (a), (b), and (c):
a.
(i) melting a thermoplastic alkenyl aromatic polymer;
(ii) mixing an effective amount of the blowing agent blend in the alkenyl aromatic polymer to define a mixture; and
(iii) extruding the mixture into a low temperature zone to form the expandable beads;
b. dissolving an effective amount of the blowing agent blend into the alkenyl aromatic polymer;
c. synthesizing the alkenyl aromatic polymer in the presence of the blowing agent blend.

24. The process of claim 22, wherein the step of expanding the beads includes:
heating the polymer-blowing agent blend formulation to a temperature at or above the glass transition temperature of the polymer-blowing agent formulation; or
subjecting the beads to an external compressive stress at a temperature up to the glass transition temperature of the polymer-blowing agent formulation.

25. The process of claim 22, further including the step of forming a contoured shape from the expanded beads.

26. The process of claim 22, wherein the blowing agent blend comprises 5 to 80 mole percent methyl formate, and at least one co-blowing agent.

27. The process of claim 26, wherein the blowing agent blend comprises 30 to 50 mole percent methyl formate, and at least one co-blowing agent.

28. The process of claim 22, wherein the at least one co-blowing agent is a physical co-blowing agent, a chemical co-blowing agent, or a combination thereof.

29. The process of claim 28, wherein the at least one co-blowing agent is a physical co-blowing agent selected from the group consisting of an inorganic agent, a hydrocarbon, a halogenated hydrocarbon, an ether, an ester, an acetal, an alkanol, a carbonate, an amine, a ketone, and any combination thereof.

30. The process of claim 29, wherein the at least one co-blowing agent is selected from the group consisting of a hydrocarbon containing four or five carbon atoms, 1,1,1,2-tetrafluoroethane (HFC-134a) and 1-chloro-1,1-difluoroethane (HCFC-142b).

31. The process of claim 29, wherein the at least one co-blowing agent selected from the group consisting of ethane, propane, cyclopropane, normal-butane, isobutane, cyclobutane, neopentane, isopentane, cyclopentane, carbon dioxide and water.

32. The process of claim 30, wherein the at least one co-blowing agent is selected from the group consisting of a hydrocarbon containing five carbon atoms and 1,1,1,2-tetrafluoroethane (HFC-134a).

33. The process of claim 31, wherein the at least one co-blowing agent is carbon dioxide.

34. The process of claim 22, wherein the alkenyl aromatic polymer foam includes polystyrene.

35. The process of claim 22, wherein the alkenyl aromatic polymer foam structure has a density of about 1 to 15 lb/ft³ (0.016 to 0.240 g/cm³).

36. The process of claim 22, wherein the alkenyl aromatic polymer foam structure is an insulating foam having a thickness of at least about 0.5 inch (1.27 cm) and an R value of about 4 per inch (1.57 per cm) or greater.

37. A process for producing a thermoplastic polymer foam structure comprising:
preparing an expandable polymeric formulation comprising a thermoplastic polymer and a blowing agent blend, the blowing agent blend comprising methyl formate and at least one co-blowing agent, and
expanding the formulation to form the thermoplastic polymer foam structure **characterized in that** the co-blowing agent is selected from the group consisting of a hydrocarbon, methyl fluoride, difluoromethane (HFC-32), trifluoromethane (HFC-23), perfluoromethane, chlorodifluoromethane (HCFC-22), methylene chloride, ethyl chloride, ethyl fluoride, 1,2-difluoroethane (HFC-152), 1,1-difluoroethane (HFC-152a), 1,1,1-trifluoroethane (HFC-143a), 1,1,2,2-tetrafluoroethane (HFC-134), 1,1,1,2-tetrafluoroethane (HFC-134a), pentafluoroethane (HFC-125), perfluoroethane, 1,1-dichloro-1-fluoroethane (HCFC-141 b), 1-chloro-1,1-difluoroethane (HCFC-142b), 1,1-dichloro-2,2,2-trifluoroethane (HCFC-123), and 1-chloro-1,2,2,2-tetrafluoroethane (HCFC-124), difluoropropane, 1,1,1-trifluoropropane, 1,1,1,3,3-pentafluoropropane (HFC-245fa), 1,1,1,2,3,3-hexafluoropropane (HFC-236ea), 1,1,1,2,3,3,3-heptafluoropropane (HFC-227ea), perfluoropropane, 2,2,4,4,4-pentafluorobutane (HFC-365mfc), perfluorobutane, perfluorocyclobutane, vinyl fluoride, an ester, an acetal, an alkanol, a carbonate, an amine, a ketone, an inorganic agent and a chemical blowing agent.

38. The process of claim 37, wherein the polymer foam structure is a polymer foam board.

39. The process of claim 37, wherein the polymer foam structure is a polymer foam sheet.

40. The process of claim 37, wherein preparing the expandable polymeric formulation further includes forming the formulation into an expandable bead prior to the expanding step.

41. The process of claim 40, wherein preparing the expandable polymeric formulation further includes a process selected from the group consisting of (a), (b), and (c):
a.
(i) melting a thermoplastic polymer;
(ii) mixing an effective amount of the blowing agent blend in the thermoplastic polymer to define a mixture; and
(iii) extruding the mixture into a low temperature zone to form the expandable beads;
b. dissolving an effective amount of the blowing agent blend into the thermoplastic polymer;
c. synthesizing the thermoplastic polymer in the presence of the blowing agent blend.

42. The process of claim 37, wherein the polymeric foam structure is dimensionally stable.

43. The process of claim 42, wherein the polymeric foam structure has an absolute percent gauge change less than about 15 percent after aging up to seven days.

44. The process of claim 37, wherein preparing the expandable polymeric formulation comprises:
melting a thermoplastic polymer; and
dissolving an effective amount of the blowing agent blend in the thermoplastic polymer to define the formulation.

45. The process of claim 37, wherein the blowing agent blend comprises 5 to 80 mole percent of methyl formate.

46. The process of claim 37, wherein the at least one co-blowing agent is a physical co-blowing agent, a chemical co-blowing agent, or a combination thereof.

47. The process of claim 46, wherein the at least one co-blowing agent is a physical co-blowing agent selected from the group consisting of an inorganic agent, a hydrocarbon, a halogenated hydrocarbon, an ether, an ester, an acetal, an alkanol, a carbonate, an amine, a ketone, and any combination thereof.

48. The process of claim 47, wherein the at least one co-blowing agent is selected from the group consisting of a hydrocarbon containing four or five carbon atoms, 1,1,1,2-tetrafluoroethane (HFC-134a) and 1-chloro-1,1-difluoroethane (HCFC-142b).

49. The process of claim 47, wherein the at least one co-blowing agent selected from the group consisting of ethane, propane, cyclopropane, normal-butane, isobutane, cyclobutane, neopentane, isopentane, cyclopentane, carbon dioxide and water.

50. The process of claim 48, wherein the at least one co-blowing agent is selected from the group consisting of a hydrocarbon containing five carbon atoms and 1,1,1,2-tetrafluoroethane (HFC-134a).

51. The process of claim 37, wherein the thermoplastic polymer is an amorphous polymer selected from the group consisting of polystyrene, polycarbonate, poly(methyl methacrylate), poly(phenylene oxide) and mixtures thereof.

## Patentansprüche

1. Schäumbare Polymerrezeptur für die Herstellung einer aufgeschäumten alkenylaromatischen Polymerschaumstruktur, wobei die Rezeptur aufweist:
ein thermoplastisches alkenylaromatisches Polymer und eine Treibmittelmischung, wobei die Treibmittelmischung Methylformiat und zumindest ein Co-Treibmittel aufweist, und wobei die Rezeptur in Form von schäumbaren Perlen vorliegt.

2. Schäumbare Polymerrezeptur nach Anspruch 1, wobei die Treibmittelmischung 5 bis 80 Mol-% Methylformiat und zumindest ein Co-Treibmittel aufweist.

3. Schäumbare Polymerrezeptur nach Anspruch 2, wobei die Treibmittelmischung 30 bis 50 Mol-% Methylformiat und zumindest ein Co-Treibmittel aufweist.

4. Schäumbare Polymerrezeptur nach Anspruch 1, wobei das zumindest eine Co-Treibmittel ein physikalisches Co-Treibmittel, ein chemisches Co-Treibmittel oder eine Kombination davon ist.

5. Schäumbare Polymerrezeptur nach Anspruch 4, wobei das zumindest eine Co-Treibmittel ein physikalisches Co-Treibmittel ist, das aus der Gruppe ausgewählt ist, die aus einem anorganischen Agens, einem Kohlenwasserstoff, einen halogenierten Kohlenwasserstoff, einem Ether, einem Ester, einem Acetal, einem Alkanol, einem Carbonat, einem Amin, einem Keton und irgendeiner Kombination davon besteht.

6. Schäumbare Polymerrezeptur nach Anspruch 5, wobei das zumindest eine Co-Treibmittel aus der Gruppe ausgewählt ist, die aus einem Kohlenwasserstoff, der vier oder fünf Kohlenstoffatome enthält, 1,1,1,2-Tetrafluoroethan (HFC-134a) und 1 -Chlor- 1,1-Difluoroethan (HCFC-142b) besteht.

7. Schäumbare Polymerrezeptur nach Anspruch 5, wobei das zumindest eine Co-Treibmittel aus der Gruppe ausgewählt ist, die aus Ethan, Propan, Cyclopropan, n-Butan, Isobutan, Cyclobutan, Neopentan, Isopentan, Cyclopentan, Kohlendioxid und Wasser besteht.

8. Schäumbare Polymerrezeptur nach Anspruch 6, wobei das zumindest eine Co-Treibmittel aus der Gruppe ausgewählt ist, die aus einem Kohlenwasserstoff, der fünf Koh-lenstoffatome enthält, und 1,1,1,2-Tetrafluoroethan (HFC-134a) besteht.

9. Schäumbare Polymerrezeptur nach Anspruch 7, wobei das zumindest eine Co-Treibmittel Kohlendioxid ist.

10. Schäumbare Polymerrezeptur nach Anspruch 1, wobei das alkenylaromatische Polymer Polystyrol umfasst.

11. Aufgeschäumte alkenylaromatische Polymerschaumstruktur, gebildet durch:
Herstellen einer schäumbaren Polymerrezeptur in Form schäumbarer Perlen, wobei die Rezeptur ein thermoplastisches alkenylaromatisches Polymer und eine Treibmittelmischung umfasst, wobei die Treibmittelmischung Methylformiat und zumindest ein Co-Treibmittel aufweist;
Aufschäumen der schäumbaren Perlen; und
miteinander Verschmelzen der schäumbaren Perlen, um die geschäumte alkenylaromatische Schaumstruktur zu bilden.

12. Alkenylaromatische Polymerschaumstruktur nach Anspruch 11, wobei die schäumbaren Perlen durch ein Verfahren ausgewählt aus (a), (b) und (c) gebildet werden:
a.
(i) Schmelzen eines thermoplastischen alkenylaromatischen Polymers;
(ii) Mischen einer wirksamen Menge der Treibmittelmischung in das alkenylaromatische Polymer, um ein Gemisch zu bestimmen; und
(iii) Extrudieren des Gemischs in einem Niedertemperaturbereich, um die schäumbaren Perlen zu bilden;
b. Lösen einer wirksamen Menge der Treibmittelmischung in dem alkenylaromatischen Polymer;
c. Synthetisieren des alkenylaromatischen Polymers in Gegenwart der Treibmittelmischung.

13. Alkenylaromatische Polymerschaumstruktur nach Anspruch 11, wobei der Schritt des Aufschäumens der Perlen umfasst:
Erhitzen der Perlen auf eine Temperatur zumindest bei oder oberhalb der Glasübergangstemperatur der Polymer-Treibmittelrezeptur; oder
Unterziehen der Perlen einer äußeren Druckbelastung bei einer Temperatur bis zu der Glasübergangstemperatur der Polymer-Treibmittelrezeptur.

14. Alkenylaromatische Polymerschaumstruktur nach Anspruch 11, wobei die Treibmittelmischung 20 bis 50 Mol-% Methylformiat und zumindest ein Co-Treibmittel aufweist.

15. Alkenylaromatische Polymerschaumstruktur nach Anspruch 11, wobei das zumindest eine Co-Treibmittel ein physikalisches Co-Treibmittel, ein chemisches Co-Treibmittel oder eine Kombination davon ist.

16. Alkenylaromatische Polymerschaumstruktur nach Anspruch 15, wobei das zumindest eine Co-Treibmittel ein physikalisches Co-Treibmittel ist, dass aus der Gruppe ausgewählt ist, die aus einem anorganischen Mittel, einem Kohlenwasserstoff, einem halogenierten Kohlenwasserstoff, einem Ether, einem Ester, einem Acetal, einem Alkanol, einem Carbonat, einem Armin, einem Keton und jeglicher Kombination davon besteht.

17. Alkenylaromatische Polymerschaumstruktur nach Anspruch 16, wobei das zumindest eine Co-Treibmittel aus der Gruppe ausgewählt ist, die aus einem Kohlenwasserstoff, der vier oder fünf Kohlenstoffatome enthält, 1,1,1,2-Tetrafluoroethan (HFC-134a) und 1 -Chlor-1,1-Difluoroethan (HCFC-142b) besteht.

18. Alkenylaromatische Polymerschaumstruktur nach Anspruch 11, wobei das alkenylaromatische Polymer Polystyrol umfasst.

19. Alkenylaromatische Polymerschaumstruktur nach Anspruch 11, wobei der alkenylaromatische Polymerschaum eine Dichte von etwa 1 bis 15 lb/ft³ (0,016 bis 0,240 g/cm³) aufweist.

20. Alkenylaromatische Polymerschaumstruktur nach Anspruch 11, wobei die alkenylaroma-tische Polymerschaumstruktur ein Isolierschaum mit einer Dicke von zumindest 0,5 inch (1,27 cm) und einem R-Wert von etwa 4 pro inch (1,57 pro cm) oder größer ist.

21. Alkenylaromatische Polymerschaumstruktur nach Anspruch 11, wobei die alkenylaromatische Polymerschaumstruktur eine Struktur aus im Wesentlichen geschlossenen Zellen ist.

22. Verfahren zur Herstellung einer aufgeschäumten alkenylaromatischen Polymerschaumstruktur, umfassend:
Herstellen einer schäumbaren Polymerrezeptur in Form von schäumbaren Perlen, wobei die Rezeptur ein thermoplastisches alkenylaromatisches Polymer und eine Treibmittelmischung umfasst, wobei die Treibmittelmischung Methylformiat und zumindest ein Co-Treibmittel aufweist, und
Aufschäumen der Rezeptur, um die aufgeschäumte alkenylaromatische Schaumstruktur zu bilden.

23. Verfahren nach Anspruch 22, wobei die schäumbaren Perlen durch ein Verfahren gebildet werden, das aus (a), (b) und (c) ausgewählt ist:
a.
(i) Schmelzen eines thermoplastischen alkenylaromatischen Polymers;
(ii) Mischen einer wirksamen Menge der Treibmittelmischung in das alkenylaromatische Polymer, um ein Gemisch zu bestimmen; und
(iii) Extrudieren des Gemischs in einen Niedertemperaturbereich, um die schäumbaren Perlen zu bilden;
b. Lösen einer wirksamen Menge der Treibmittelmischung in dem alkenylaromatischen Polymer;
c. Synthetisieren des alkenylaromatischen Polymers in Gegenwart der Treibmittelmischung.

24. Verfahren nach Anspruch 22, wobei der Schritt des Aufschäumens der Perlen umfasst:
Erhitzen der Polymer-Treibmittelrezeptur auf eine Temperatur bei oder oberhalb der Glasübergangstemperatur der Polymer-Treibmittelrezeptur; oder
Unterziehen der Perlen einer äußeren Druckbelastung bei einer Temperatur bis zu der Glasübergangstemperatur der Polymer-Treibmittelrezeptur.

25. Verfahren nach Anspruch 22, das ferner den Schritt des Bildens einer konturierten Form aus den schäumbaren Perlen umfasst.

26. Verfahren nach Anspruch 22, wobei die Treibmittelmischung 5 bis 80 Mol-% Methylformiat und zumindest ein Co-Treibmittel aufweist.

27. Verfahren nach Anspruch 26, wobei die Treibmittelmischung 30 bis 50 Mol-% Methylformiat und zumindest ein Co-Treibmittel aufweist.

28. Verfahren nach Anspruch 22, wobei das zumindest eine Co-Treibmittel ein physikalisches Co-Treibmittel, ein chemisches Co-Treibmittel oder eine Kombination davon ist.

29. Verfahren nach Anspruch 28, wobei das zumindest eine Co-Treibmittel ein physikalisches Co-Treibmittel ist, das aus der Gruppe ausgewählt ist, die aus einem anorganischen Mittel, einem Kohlenwasserstoff, einem halogenierten Kohlenwasserstoff, einem Ether, einem Ester, einem Acetal, einem Alkanol, einem Carbonat, einem Armin, einem Keton und jeglicher Kombination davon besteht.

30. Verfahren nach Anspruch 29, wobei das zumindest eine Co-Treibmittel aus der Gruppe ausgewählt ist, die aus einem Kohlenwasserstoff, der vier oder fünf Kohlenstoffatome enthält, 1,1,1,2-Tetrafluoroethan (HFC-134a) und 1-Chlor-1,1 - Difluoroethan (HCFC-142b) besteht.

31. Verfahren nach Anspruch 29, wobei das zumindest eine Co-Treibmittel aus der Gruppe ausgewählt ist, die aus Ethan, Propan, Cyclopropan, n-Butan, Isobutan, Cyclobutan, Neopentan, Isopentan, Cyclopentan, Kohlendioxid und Wasser besteht.

32. Verfahren nach Anspruch 30, wobei das zumindest eine Co-Treibmittel aus der Gruppe ausgewählt ist, die aus einem Kohlenwasserstoff, der fünf Kohlenstoffatome enthält, und 1,1,1,2-Tetrafluoroethan (HFC-134a) besteht.

33. Verfahren nach Anspruch 31, wobei das zumindest ein Co-Treibmittel Kohlendioxid ist.

34. Verfahren nach Anspruch 22, wobei der alkenylaromatische Polymerschaum Polysterol umfasst.

35. Verfahren nach Anspruch 22, wobei die alkenylaromatische Polymerschaumstruktur eine Dichte von etwa 1 bis 15 lb/ft³ (0,016 bis 0,240 g/cm³) aufweist.

36. Verfahren nach Anspruch 22, wobei die alkenylaromatische Polymerschaumstruktur ein Isolationsschaum mit einer Dicke von zumindest etwa 0,5 inch (1,27 cm) und einem R-Wert von etwa 4 pro inch (1,57 pro cm) oder größer ist.

37. Verfahren zur Herstellung einer thermoplastischen Polymerschaumstruktur, aufweisend:
Herstellen einer schäumbaren Polymerrezeptur, die ein thermoplastisches Polymer und eine Treibmittelmischung aufweist, wobei die Treibmittelmischung Methylformiat und zumindest ein Co-Treibmittel aufweist und
Aufschäumen der Rezeptur, um die thermoplastische Polymerschaumstruktur zu bilden, **dadurch gekennzeichnet, dass**
das Co-Treibmittel aus der Gruppe ausgewählt ist, die aus einem Kohlenwasserstoff, Methylfluorid, Difluormethan (HFC-32), Trifluormethan (HFC-23), Perfluormethan, Chlordifluormethan (HCFC-22), Methylenchlorid, Ethylchlorid, Ethylfluorid, 1,2-Difluorethan (HFC-152), 1,1-Difluorethan (HFC-152a), 1,1,1-Trifluorethan (HFC-143a), 1,1,2,2-Tetrafluorethan (HFC-134), 1,1,1,2-Tetrafluorethan (HFC-134a), Pentafluorethan (HFC-125), Perfluorethan, 1,1-Dichlor-1-Fluorethan (HCFC-141b), 1-Clor-1,1-Difluorethan (HCFC-142b), 1,1-Dichlor-2,2,2-Trifluorethan (HCFC-123), und 1-Chlor-1,2,2,2-Tetrafluorethan (HCFC-124), Difluorpropan, 1,1,1-Trifluorpropan, 1,1,1,3,3-Pentafluorpropan (HFC-245fa), 1,1,1,2,3,3-Hexafluorpropan (HFC-236ea), 1,1,1,2,3,3,3-Heptafluorpropan (HFC-227ea), Perfluorpropan, 2,2,4,4,4-Pentafluorbutan (HFC-365mfc), Perfluorbutan, Perfluorcyclobutan, Vinylfluorid, einem Ester, einem Acetal, einem Alkanol, einem Carbonat, einem Amin, einem Keton, einem anorganischen Agens und einem chemischen Treibmittel besteht.

38. Verfahren nach Anspruch 37, wobei die Polymerschaumstruktur eine Polymerschaumplatte ist.

39. Verfahren nach Anspruch 37, wobei die Polymerschaumstruktur eine Polymerschaumfolie ist.

40. Verfahren nach Anspruch 37, wobei das Herstellen der schäumbaren Polymerrezeptur ferner umfasst, dass aus der Rezeptur eine schäumbare Perle vor dem Aufschäumschritt gebildet wird.

41. Verfahren nach Anspruch 40, wobei das Herstellen der schäumbaren Polymerrezeptur ferner ein Verfahren umfasst, das aus (a), (b) und (c) ausgewählt ist:
a.
(i) Schmelzen eines thermoplastischen Polymers;
(ii) Mischen einer wirksamen Menge der Treibmittelmischung in das thermoplastische Polymer, um ein Gemisch zu bestimmen; und
(iii) Extrudieren der Mischung in einem Niedertemperaturbereich, um die schäumbaren Perlen zu bilden;
b. Lösen einer wirksamen Menge der Treibmittelmischung in dem thermoplastischen Polymer;
c. Synthetisieren des thermoplastischen Polymers in Gegenwart der Treibmittelmischung.

42. Verfahren nach Anspruch 37, wobei die Polymerschaumstruktur formstabil ist.

43. Verfahren nach Anspruch 42, wobei die Polymerschaumstruktur eine absolute prozentuale Maßveränderung von weniger als etwa 15 Prozent nach Alterung von bis zu sieben Tagen aufweist.

44. Verfahren nach Anspruch 37, wobei das Herstellen der schäumbaren Polymerrezeptur aufweist:
Schmelzen eines thermoplastischen Polymers; und
Lösen einer wirksamen Menge der Treibmittelmischung in dem thermoplastischen Polymer, um die Rezeptur zu bestimmen.

45. Verfahren nach Anspruch 37, wobei die Treibmittelmischung 5 bis 80 Molprozent Methylformiat aufweist.

46. Verfahren nach Anspruch 37, wobei das zumindest eine Co-Treibmittel ein physikalisches Co-Treibmittel, ein chemisches Co-Treibmittel oder eine Kombination davon ist.

47. Verfahren nach Anspruch 46, wobei das zumindest eine Co-Treibmittel ein physikalisches Co-Treibmittel ist, das aus der Gruppe ausgewählt ist, die aus einem anorganischen Mittel, einem Kohlenwasserstoff, einem halogenierten Kohlenwasserstoff, einem Ether, einem Ester, einem Acetal, einem Alkanol, einem Carbonat, einem Amin, einem Keton und jeder Kombination davon besteht.

48. Verfahren nach Anspruch 47, wobei das zumindest eine Co-Treibmittel aus der Gruppe ausgewählt ist, die aus einem Kohlenwasserstoff, der vier oder fünf Kohlenstoffatome enthält, 1,1,1,2-Tetrafluorethan (HFC-134a) und 1 -Chlor-1,1-Difluorethan (HCFC-142b) besteht.

49. Verfahren nach Anspruch 47, wobei das zumindest eine Co-Treibmittel aus der Gruppe ausgewählt ist, die aus Ethan, Propan, Cyclopropan, n-Butan, Isobutan, Cyclobutan, Neopentan, Isopentan, Cyclopentan, Kohlendioxid und Wasser besteht.

50. Verfahren nach Anspruch 48, wobei das zumindest eine Co-Teibmittel aus der Gruppe ausgewählt ist, die aus einem Kohlenwasserstoff, der fünf Kohlenstoffatome enthält und 1,1,1,2-Tetrafluorethan (HFC-134a) besteht.

51. Verfahren nach Anspruch 37, wobei das thermoplastische Polymer ein amorphes Polymer ist, das aus der Gruppe ausgewählt ist, die aus Polystyrol, Polycarbonat, Polymethylmethacrylat, Polyphenylenoxid und Mischungen davon besteht.

## Revendications

1. Formulation polymère expansible pour la préparation d'une structure en mousse de polymère alcénylaromatique expansée, la formulation comprenant : un polymère alcénylaromatique thermoplastique et un mélange d'agents porogènes, le mélange d'agents porogènes comprenant du formiate de méthyle et au moins un co-agent porogène, laquelle formulation est sous la forme de perles expansibles.

2. Formulation polymère expansible selon la revendication 1, dans laquelle le mélange d'agents porogènes comprend 5 à 80 % en moles de formiate de méthyle et au moins un co-agent porogène.

3. Formulation polymère expansible selon la revendication 2, dans laquelle le mélange d'agents porogènes comprend 30 à 50 % en moles de formiate de méthyle et au moins un co-agent porogène.

4. Formulation polymère expansible selon la revendication 1, dans laquelle l'au moins un co-agent porogène est un co-agent porogène physique, un co-agent porogène chimique, ou une de leurs combinaisons.

5. Formulation polymère expansible selon la revendication 4, dans laquelle l'au moins un co-agent porogène est un co-agent porogène physique choisi dans le groupe constitué par un agent inorganique, un hydrocarbure, un hydrocarbure halogéné, un éther, un ester, un acétal, un alcanol, un carbonate, une amine, une cétone, et l'une quelconque de leurs combinaisons.

6. Formulation polymère expansible selon la revendication 5, dans laquelle l'au moins un co-agent porogène est choisi dans le groupe constitué par un hydrocarbure contenant quatre ou cinq atomes de carbone, le 1,1,1,2-tétrafluoroéthane (HFC-134a) et le 1-chloro-1,1-difluoroéthane (HCFC-142b).

7. Formulation polymère expansible selon la revendication 5, dans laquelle l'au moins un co-agent porogène est choisi dans le groupe constitué par l'éthane, le propane, le cyclopropane, le n-butane, l'isobutane, le cyclobutane, le néopentane, l'isopentane, le cyclopentane, le dioxyde de carbone et l'eau.

8. Formulation polymère expansible selon la revendication 6, dans laquelle l'au moins un co-agent porogène est choisi dans le groupe constitué par un hydrocarbure contenant cinq atomes de carbone et le 1,1,1,2-tétrafluoroéthane (HFC-134a).

9. Formulation polymère expansible selon la revendication 7, dans laquelle l'au moins un co-agent porogène est le dioxyde de carbone.

10. Formulation polymère expansible selon la revendication 1, dans laquelle le polymère alcénylaromatique comprend du polystyrène.

11. Structure en mousse de polymère alcénylaromatique expansée formée par :
préparation d'une formulation polymère expansible sous la forme de perles expansibles, la formulation comprenant un polymère alcénylaromatique thermoplastique et un mélange d'agents porogènes, le mélange d'agents porogènes comprenant du formiate de méthyle et au moins un co-agent porogène ;
expansion des perles expansibles ; et
fusion des perles expansibles ensemble pour former la structure en mousse alcénylaromatique expansée.

12. Structure en mousse de polymère alcénylaromatique selon la revendication 11, dans laquelle les perles expansibles sont formées par un procédé choisi dans le groupe constitué par (a), (b) et (c) :
a.
(i) fusion d'un polymère alcénylaromatique thermoplastique ;
(ii) mélange d'une quantité effective du mélange d'agents porogènes dans le polymère alcénylaromatique pour définir un mélange ; et
(iii) extrusion du mélange dans une zone à basse température pour former les perles expansibles ;
b. dissolution d'une quantité effective du mélange d'agents porogènes dans le polymère alcénylaromatique ;
c. synthèse du polymère alcénylaromatique en présence du mélange d'agents porogènes.

13. Structure en mousse de polymère alcénylaromatique selon la revendication 11, dans laquelle l'étape d'expansion des perles comprend :
le chauffage des perles à une température au moins égale ou supérieure à la température de transition vitreuse de la formulation de polymère/agents porogènes ; ou
le fait de soumettre les perles à une contrainte de compression externe à une température allant jusqu'à la température de transition vitreuse de la formulation de polymère/agents porogènes.

14. Structure en mousse de polymère alcénylaromatique selon la revendication 11, dans laquelle le mélange d'agents porogènes comprend 20 à 50 % en moles de formiate de méthyle, et au moins un co-agent porogène.

15. Structure en mousse de polymère alcénylaromatique selon la revendication 11, dans laquelle l'au moins un co-agent porogène est un co-agent porogène physique, un co-agent porogène chimique, ou une de leurs combinaisons.

16. Structure en mousse de polymère alcénylaromatique selon la revendication 15, dans laquelle l'au moins un co-agent porogène est un co-agent porogène physique choisi dans le groupe constitué par un agent inorganique, un hydrocarbure, un hydrocarbure halogéné, un éther, un ester, un acétal, un alcanol, un carbonate, une amine, une cétone, et l'une quelconque de leurs combinaisons.

17. Structure en mousse de polymère alcénylaromatique selon la revendication 16, dans laquelle l'au moins un co-agent porogène est choisi dans le groupe constitué par un hydrocarbure contenant quatre ou cinq atomes de carbone, le 1,1,1,2-tétrafluoroéthane (HFC-134a) et le 1-chloro-1,1-difluoroéthane (HCFC-142b).

18. Structure en mousse de polymère alcénylaromatique selon la revendication 11, dans laquelle le polymère alcénylaromatique comprend du polystyrène.

19. Structure en mousse de polymère alcénylaromatique selon la revendication 11, dans laquelle la mousse de polymère alcénylaromatique a une masse volumique d'environ 0,016 à 0,240 g/cm³ (1 à 15 lb/ft³).

20. Structure en mousse de polymère alcénylaromatique selon la revendication 11, laquelle structure en mousse de polymère alcénylaromatique est une mousse isolante ayant une épaisseur d'au moins environ 1,27 cm (0,5 pouce) et une valeur R d'environ 1,57 par cm (4 par pouce) ou plus.

21. Structure en mousse de polymère alcénylaromatique selon la revendication 11, laquelle structure en mousse de polymère alcénylaromatique est une structure sensiblement à alvéoles fermées.

22. Procédé pour préparer une structure en mousse de polymère alcénylaromatique expansée comprenant :
la préparation d'une formulation polymère expansible sous la forme de perles expansibles, la formation contenant un polymère alcénylaromatique thermoplastique et un mélange d'agents porogènes, le mélange d'agents porogènes comprenant du formiate de méthyle et au moins un co-agent porogène, et
l'expansion de la formulation pour former la structure en mousse alcénylaromatique expansée.

23. Procédé selon la revendication 22, dans lequel les perles expansibles sont formées par un procédé choisi dans le groupe constitué par (a), (b) et (c) :
a.
(i) fusion d'un polymère alcénylaromatique thermoplastique ;
(ii) mélange d'une quantité effective du mélange d'agents porogènes dans le polymère alcénylaromatique pour définir un mélange ; et
(iii) extrusion du mélange dans une zone à basse température pour former les perles expansibles ;
b. dissolution d'une quantité effective du mélange d'agents porogènes dans le polymère alcénylaromatique ;
c. synthèse du polymère alcénylaromatique en présence du mélange d'agents porogènes.

24. Procédé selon la revendication 22, dans lequel l'étape d'expansion des perles comprend :
le chauffage de la formulation de polymère/agents porogènes à une température égale ou supérieure à la température de transition vitreuse de la formulation de polymère/agents porogènes ; ou
le fait de soumettre les perles à une contrainte de compression externe à une température allant jusqu'à la température de transition vitreuse de la formulation de polymère/agents porogènes.

25. Procédé selon la revendication 22, comprenant en outre l'étape de formation d'une forme profilée à partir des perles expansées.

26. Procédé selon la revendication 22, dans lequel le mélange d'agents porogènes comprend 5 à 80 % en moles de formiate de méthyle, et au moins un co-agent porogène.

27. Procédé selon la revendication 26, dans lequel le mélange d'agents porogènes comprend 30 à 50 % en moles de formiate de méthyle, et au moins un co-agent porogène.

28. Procédé selon la revendication 22, dans lequel l'au moins un co-agent porogène est un co-agent porogène physique, un co-agent porogène chimique, ou une de leurs combinaisons.

29. Procédé selon la revendication 28, dans lequel l'au moins un co-agent porogène est un co-agent porogène physique choisi dans le groupe constitué par un agent inorganique, un hydrocarbure, un hydrocarbure halogéné, un éther, un ester, un acétal, un alcanol, un carbonate, une amine, une cétone, et l'une quelconque de leurs combinaisons.

30. Procédé selon la revendication 29, dans lequel l'au moins un co-agent porogène est choisi dans le groupe constitué par un hydrocarbure contenant quatre ou cinq atomes de carbone, le 1,1,1,2-tétrafluoroéthane (HFC-134a) et le 1-chloro-1,1-difluoroéthane (HCFC-142b).

31. Procédé selon la revendication 29, dans lequel l'au moins un co-agent porogène est choisi dans le groupe constitué par l'éthane, le propane, le cyclopropane, le n-butane, l'isobutane, le cyclobutane, le néopentane, l'isopentane, le cyclopentane, le dioxyde de carbone et l'eau.

32. Procédé selon la revendication 30, dans lequel l'au moins un co-agent porogène est choisi dans le groupe constitué par un hydrocarbure contenant cinq atomes de carbone et le 1,1,1,2-tétrafluoroéthane (HFC-134a).

33. Procédé selon la revendication 31, dans lequel l'au moins un co-agent porogène est le dioxyde de carbone.

34. Procédé selon la revendication 22, dans lequel la mousse de polymère alcénylaromatique comprend du polystyrène.

35. Procédé selon la revendication 22, dans lequel la structure en mousse de polymère alcénylaromatique a une masse volumique d'environ 0,016 à 0,240 g/cm³ (1 à 15 lb/ft³).

36. Procédé selon la revendication 22, dans lequel la structure en mousse de polymère alcénylaromatique est une mousse isolante ayant une épaisseur d'au moins environ 1,27 cm (0,5 pouce) et une valeur R d'environ 1,57 par cm (4 par pouce) ou plus.

37. Procédé pour produire une structure en mousse de polymère thermoplastique comprenant :
la préparation d'une formulation polymère expansible comprenant un polymère thermoplastique et un mélange d'agents porogènes, le mélange d'agents porogènes comprenant du formiate de méthyle et au moins un co-agent porogène, et
l'expansion de la formulation pour former la structure en mousse de polymère thermoplastique,
**caractérisé en ce que** le co-agent porogène est choisi dans le groupe constitué par un hydrocarbure, le fluorure de méthyle, le difluorométhane (HFC-32), le trifluorométhane (HFC-23), le perfluorométhane, le chlorodifluorométhane (HCFC-22), le chlorure de méthylène, le chlorure d'éthyle, le fluorure d'éthyle, le 1,2-difluoroéthane (HFC-152), le 1,1-difluoroéthane (HFC-152a), le 1,1,1-trifluoroéthane (HFC-143a), le 1,1,2,2-tétrafluoroéthane (HFC-134), le 1,1,1,2-tétrafluoroéthane (HFC-134a), le pentafluoroéthane (HFC-125), le perfluoroéthane, le 1,1-dichloro-1-fluoroéthane (HCFC-141b), le 1-chloro-1,1-difluoroéthane (HCFC-142b), le 1,1-dichloro-2,2,2-trifluoroéthane (HCFC-123), et le 1-chloro-1,2,2,2-tétrafluoroéthane (HCFC-124), le difluoropropane, le 1,1,1-trifluoropropane, le 1,1,1,3,3-pentafluoropropane (HFC-245fa), le 1,1,1,2,3,3-hexafluoropropane (HFC-236ea), le 1,1,1,2,3,3,3-heptafluoropropane (HFC-227ea), le perfluoropropane, le 2,2,4,4,4-pentafluorobutane (HFC-365mfc), le perfluorobutane, le perfluorocyclobutane, le fluorure de vinyle, un ester, un acétal, un alcanol, un carbonate, une amine, une cétone, un agent inorganique et un agent porogène chimique.

38. Procédé selon la revendication 37, dans lequel la structure en mousse de polymère est une plaque en mousse de polymère.

39. Procédé selon la revendication 37, dans lequel la structure en mousse de polymère est une feuille en mousse de polymère.

40. Procédé selon la revendication 37, dans lequel la préparation de la formulation polymère expansible comprend en outre la formation de la formulation en une perle expansible avant l'étape d'expansion.

41. Procédé selon la revendication 40, dans lequel la préparation de la formulation polymère expansible comprend en outre un procédé choisi dans le groupe constitué par (a), (b) et (c) :
a.
(i) fusion d'un polymère thermoplastique ;
(ii) mélange d'une quantité effective du mélange d'agents porogènes dans le polymère thermoplastique pour définir un mélange ; et
(iii) extrusion du mélange dans une zone à basse température pour former les perles expansibles ;
b. dissolution d'une quantité effective du mélange d'agents porogènes dans le polymère thermoplastique ;
c. synthèse du polymère thermoplastique en présence du mélange d'agents porogènes.

42. Procédé selon la revendication 37, dans lequel la structure en mousse de polymère est dimensionnellement stable.

43. Procédé selon la revendication 42, dans lequel la structure en mousse de polymère a un pourcentage absolu de changement de calibre inférieur à environ 15 % après un vieillissement durant jusqu'à sept jours.

44. Procédé selon la revendication 37, dans lequel la préparation de la formulation polymère expansible comprend :
la fusion d'un polymère thermoplastique ; et
la dissolution d'une quantité effective du mélange d'agents porogènes dans le polymère thermoplastique pour définir la formulation.

45. Procédé selon la revendication 37, dans lequel le mélange d'agents porogènes comprend 5 à 80 % en moles de formiate de méthyle.

46. Procédé selon la revendication 37, dans lequel l'au moins un co-agent porogène est un co-agent porogène physique, un co-agent porogène chimique, ou une de leurs combinaisons.

47. Procédé selon la revendication 46, dans lequel l'au moins un co-agent porogène est un co-agent porogène physique choisi dans le groupe constitué par un agent inorganique, un hydrocarbure, un hydrocarbure halogéné, un éther, un ester, un acétal, un alcanol, un carbonate, une amine, une cétone, et l'une quelconque de leurs combinaisons.

48. Procédé selon la revendication 47, dans lequel l'au moins un co-agent porogène est choisi dans le groupe constitué par un hydrocarbure contenant quatre ou cinq atomes de carbone, le 1,1,1,2-tétrafluoroéthane (HFC-134a) et le 1-chloro-1,1-difluoroéthane (HCFC-142b).

49. Procédé selon la revendication 47, dans lequel l'au moins un co-agent porogène est choisi dans le groupe constitué par l'éthane, le propane, le cyclopropane, le n-butane, l'isobutane, le cyclobutane, le néopentane, l'isopentane, le cyclopentane, le dioxyde de carbone et l'eau.

50. Procédé selon la revendication 48, dans lequel l'au moins un co-agent porogène est choisi dans le groupe constitué par un hydrocarbure contenant cinq atomes de carbone et le 1,1,1,2-tétrafluoroéthane (HFC-134a).

51. Procédé selon la revendication 37, dans lequel le polymère thermoplastique est un polymère amorphe choisi dans le groupe constitué par le polystyrène, le polycarbonate, le poly(méthacrylate de méthyle), le poly(oxyde de phénylène) et leurs mélanges.
